# EUROPÄISCHE PATENTSCHRIFT

(11) **EP 3 874 257 B1**
(45) Veröffentlichungstag und Bekanntmachung des Hinweises auf die Patenterteilung: **16.07.2025**
(21) Anmeldenummer: 19798217.6
(22) Anmeldetag: 30.10.2019
(51) Int. Cl.: G01N 23/046, B22F 1/14, B33Y 40/10, B33Y 70/00, B22F 1/145, G06T 7/00, G01N 24/08

(54) **VERFAHREN ZUR AUFBEREITUNG UND ZUR UNTERSUCHUNG EINES PULVERS MITTELS INSTRUMENTELLER ANALYTIK UND VERWENDUNG**
METHOD FOR TREATING AND EXAMINING A POWDER BY MEANS OF INSTRUMENTAL ANALYSIS AND USE
PROCÉDÉ DE PRÉPARATION ET D'EXAMEN D'UNE POUDRE AU MOYEN D'UNE ANALYSE INSTRUMENTALE ET UTILISATION

(30) Priorität: 02.11.2018 DE 102018127407
(43) Veröffentlichungstag der Anmeldung: 08.09.2021
(73) Patentinhaber: Industrieanlagen-Betriebsgesellschaft mbH, 85521 Ottobrunn (DE)
(72) Erfinder: NÄKE, Tom, 85521 Ottobrunn (DE); EIBER, Marion, 85560 Ebersberg (DE)
(74) Vertreter: Meissner Bolte Partnerschaft mbB
(86) Internationale Anmeldenummer: PCT/EP2019/079681
(87) Internationale Veröffentlichungsnummer: WO 2020/089301

(56) Entgegenhaltungen:
- FABRICE BERNIER ET AL: "Additive manufacturing powder feedstock characterization using X-ray tomography", METAL POWDER REPORT., vol. 73, no. 3, 10 February 2018 (2018-02-10), GB, pages 158 - 162, XP055670278, ISSN: 0026-0657, DOI: 10.1016/j.mprp.2018.01.002
- AMIR MOSTAFAEI ET AL: "Comparison of characterization methods for differently atomized nickel-based alloy 625 powders", POWDER TECHNOLOGY - ELECTROSTATIC PHENOMENA IN PARTICULATE PROCESSES, vol. 333, 7 April 2018 (2018-04-07), Basel (CH), pages 180 - 192, XP055669379, ISSN: 0032-5910, DOI: 10.1016/j.powtec.2018.04.014
- J. A. SLOTWINSKI ET AL: "Characterization of Metal Powders Used for Additive Manufacturing", JOURNAL OF RESEARCH OF THE NATIONAL INSTITUTE OF STANDARDS AND TECHNOLOGY, vol. 119, 16 September 2014 (2014-09-16), pages 460, XP055424247, DOI: 10.6028/jres.119.018
- N NURUL REFFA AZYAN ET AL: "Techniques on Dispersion of Nanoparticles in Polymer Matrices: A Review", PERTANIKA JOURNAL OF SCIENCE & TECHNOLOGY, vol. 25, no. 4, October 2017 (2017-10-01), pages 1073 - 1084, XP055681050, ISSN: 0128-7680

## Beschreibung

Die Erfindung betrifft ein Verfahren zur Aufbereitung und zur Untersuchung eines Pulvers mittels instrumenteller Analytik, umfassend ein Herstellen eines festen Körpers und eine Verwendung eines festen Körpers.

Verfahren zur Aufbereitung und zur Untersuchung von Pulvern mittels instrumenteller Analytik sind aus dem Stand der Technik bekannt.

So beschreibt Mostafaei et al. 2018 Charakterisierungsmethoden für Pulver aus nickelbasierten Legierungen, die im Bereich der additiven Herstellungsverfahren (3D-Druckverfahren) Anwendung finden. Dabei sind die beschriebenen Charakterisierungsverfahren arbeits- und damit kostenintensiv.

Slotwinski et al. beschreibt ein Verfahren, bei dem ein Pulver in einem Epoxyharz dispergiert wird.

Es ist Aufgabe der Erfindung ein Verfahren bereitzustellen, das eine Aufbereitung und eine Untersuchung eines Pulvers mittels instrumenteller Analytik zeit- und arbeitseffizient, kostengünstig und vereinfacht durchführbar macht und eine verbesserte Analytik bereitstellt.

Diese technische Aufgabe wird insbesondere durch ein Verfahren, umfassend die Schritte nach Anspruch 1, gelöst.

Durch ein Verfahren der oben beschriebenen Art wird einem Pulver, insbesondere einem Pulver für den Anwendungsbereich der additiven Fertigung (3-D Druck) mindestens eine Kenngröße zugewiesen, die Aufschluss über die Verwendbarkeit des Pulvers in/für verschiedene(n) Fertigungsprozesse(n), zum Beispiel Lasersintering, insbesondere aber auch aller anderen 3-D Druckverfahren, in denen Pulver aufgeschmolzen und/oder umgeschmolzen werden, ermöglicht. Insbesondere können direkte Aussagen über die Prozessfähigkeit des Pulvers getroffen werden (zum Beispiel Auftragsfähigkeit durch den Beschichter, und/oder der Korrelation von Schichthöhe zu Pulverkorngröße). Vorzugsweise bilden die ermittelten Kenngrößen die Grundlage für eine Auswertung des insbesondere durch Röntgentomografie/CT-Bildgebungsverfahren ermittelten digitalen Volumens.

Als "Partikel" können insbesondere Pulverkörner des zu untersuchenden Pulvers und/oder insbesondere Fremdkörper und/oder insbesondere Verunreinigungen und/oder insbesondere Unterbestandteile des Pulvers, die insbesondere nicht den mindestens 90 Gewichtsprozent (Gew-%) der meist vorliegenden Form von "Partikeln" im Pulver entsprechen.

Unter "zweidimensionaler bildlicher Darstellung" ist dabei insbesondere zu verstehen, dass eine zweidimensionale Darstellung, insbesondere eine Aufsicht und/oder eine Seitenansicht von Pulverkörnern einer initiären Kleinmenge erzeugt werden. Diese mindestens eine zweidimensionale bildliche Darstellung kann eine rasterelektronenmikroskopische Aufnahme und/oder eine AFM-Aufnahme (AFM = engl. "atomic force microscopy") und/oder ein Röntgendurchstrahlungsbild der initiären Kleinmenge und/oder Teilen der initiären Kleinmenge sein. Weiter vorzugsweise sind 2-D-Schnittbilder, insbesondere basierend auf CT-Verfahren, zu verstehen, die insbesondere einen Einblick in mindestens eine Schicht, insbesondere mindestens eines Pulverkorns liefern, weiter insbesondere einen Einblick in mindestens eine Schicht einer statistisch auswertenbaren Menge an Pulverkörner liefern und/oder in mehrere Schichten Einblick liefern.

Die zweidimensionale bildliche Darstellung der initiären Kleinmenge kann insbesondere mindestens ungefähr 100 Pulverkörner, und/oder mindestens ungefähr 50 Pulverkörner und/oder höchstens 500 Pulverkörner und/oder höchstens 1000 Pulverkörner umfassen. Dabei sind Angaben, die mit "ungefähr" versehen sind in der vorliegenden Beschreibung, im Sinne der vorliegenden Erfindung mit insbesondere +/-10 %, weiter insbesondere +/-20 % des jeweiligen Zahlenwertes zu verstehen, werden insbesondere aber nicht als erfindungswesentlich beansprucht.

Vorzugsweise ist unter einer initiären Kleinmenge, eine Menge an Pulverkörnern der Pulverkörner aus der Gesamtheit des Pulvers zu verstehen, umfassend insbesondere mindestens ungefähr 100 Pulverkörner, und/oder mindestens ungefähr 50 Pulverkörner und/oder höchstens 500 Pulverkörner und/oder höchstens 1000 Pulverkörner.

Vorzugsweise werden die in der zweidimensionalen bildlichen Darstellung dargestellten Pulverkörner, also insbesondere die zweidimensionale bildliche Darstellung eines Teils dieser Pulverkörner, bzw. der Gesamtheit der in der initiären Kleinmenge enthaltenen Pulverkörner herangezogen und diese zweidimensionale bildliche Darstellung dieser Pulverkörner analysiert, um mindestens einen initiären Pulverkornstrukturparameter zu ermitteln und auszugeben.

Vorzugsweise kann mindestens ein initiärer Pulverkornstrukturparameter ein Pulverkornvolumen und/oder insbesondere eine Pulverkornsphärizität, und/oder insbesondere eine Pulverkornlänge und/oder insbesondere eine Pulverkornelliptizität, insbesondere einer Schichtansicht, eines 2-D Schnittbildes und/oder insbesondere ein Pulverkornagglomerationsparameter sein, weiter insbesondere kann der mindestens eine initiäre Pulverkornstrukturparameter ein Topographieparameter und/oder insbesondere ein Morphologieparameter und/oder insbesondere ein (Element-)Zusammensetzungparameter und/oder insbesondere ein Materialkontrastparameter sein.

Ein Kerngedanke der Erfindung ist das Herstellen eines festen Körpers, in den eine Vielzahl von Pulverkörnern angeordnet ist derart, dass die Mehrheit der Pulverkörner im festen Körper zu umgebenden Pulverkörnern im feste Körper beabstandet sind, insbesondere derart beabstandet sind, dass die Oberfläche der einzelnen Pulverkörner im festen Körper frei zugänglich ist, insbesondere für mindestens eine weitere bildliche Darstellung und/oder mindestens eine bildliche Untersuchung frei zugänglich ist.

Ein fester Körper im Sinne der Erfindung, ist insbesondere ein real, also in der physischen Realität existierender Körper, der insbesondere physikalischen und/oder chemischen Untersuchungen unterziehbar ist. Der feste Körper kann dabei aus Kunststoff und/oder Harz und/oder Kleber und oder Polymermatrizen ausgebildet sein, weiter insbesondere aus Zweikomponetenharz und/oder einem vergleichbaren Verbundstoff und/oder verbindbaren Stoff ausgebildet sein.

Erfindungsgemäß wird jedoch der feste Körper aus Zweikomponentenharz hergestellt.

Der feste Körper ist insbesondere kein Werkstück, insbesondere kein Werkstück, hergestellt nach einem "Top-Down-Approach", also insbesondere nicht durch das Herausarbeiten eines Körpers aus einem größeren festen Körper entstandenes Werkstück. Nicht als fester Körper im Sinne der vorliegenden Erfindung zu verstehen, ist insbesondere ein digitaler Körper, also ein Körper ohne eine real, also ohne eine in der physischen Realität existierende Form.

Die Verteilung der Vielzahl von Pulverkörnern im festen Körper ist homogen, so dass der feste Körper also insbesondere über den gesamten festen Körper eine gleiche Pulverkorndichte aufweist. Dabei ist die Pulverkorndichte, insbesondere mindestens ungefähr 0,1 Pulverkorn pro Kubikmillimeter (mm³) und/oder mindestens ungefähr 2 Pulverkörner pro Kubikmillimeter und/oder mindestens ungefähr 40 Pulverkörner pro Kubikmillimeter und/oder maximal ungefähr 800 Pulverkörner pro Kubikmillimeter und oder maximal ungefähr 16 000 Pulverkörner pro Kubikmillimeter. Als homogen ist in diesem Zusammenhang insbesondere zu verstehen, dass die zuvor beschriebene Pulverkorndichte im festen Körper über den gesamten festen Körper gesehen gleichbleibt, also der feste Körper insbesondere keine nennenswert höherdichten und oder nennenswert niederdichten Bereiche aufweist. Dabei ist insbesondere "nennenswert" entsprechend "ungefähr", insbesondere wie zuvor definiert, zu verstehen.

Vorzugsweise ist "vereinzelt" im Sinne der vorliegenden Erfindung gleichbedeutend mit beabstandet und derart zu verstehen. Weiter insbesondere ist es so zu verstehen, dass insbesondere in zumindest weitestgehend alle Richtungen des Körpers die Pulverkörner vereinzelt, also insbesondere beabstandet voneinander vorliegen, insbesondere in zumindest weitestgehend eine der geometrischen Hauptachsen des festen Körpers vereinzelt, also beabstandet vorliegen. Dabei sind geometrische Hauptachsen des festen Körpers insbesondere die Hauptrotationsachsen, und/oder Symmetrieachsen und/oder die längste und/oder die kürzeste Achse durch den Körper zu verstehen. Nebenachsen sind vorzugsweise solche Achsen, die keine Hauptachsen im Sinne der hier gegebenen Definition darstellen.

Erfindungsgemäß ist die Vielzahl der Pulverkörner im festen Körper eine "statistisch validierbare Pulverrepräsentation", also insbesondere eine Menge an Pulverkörnern, die nach statistischer Analyse Rückschlüsse auf die Eigenschaften der Gesamtheit der Pulverkörner im Pulver, insbesondere auf die Eigenschaften der Gesamtheit der Pulverkörner in der gesamten Charge des Pulvers gibt. Eine statistisch validierbare Pulverrepräsentation umfasst, insbesondere mindestens 100 Pulverkörner und/oder mindestens 1000 und/oder höchstens 1 000 000 Pulverkörner und/oder insbesondere nicht mehr als 10 000 000 Pulverkörner.

Es ist möglich, ca. 1 g Pulver als Masse insgesamt in den Körper einzubringen. Die Erfindung ist hierauf nicht eingeschränkt. Weitaus größere Massen sind möglich, da nur ein Teilbereich der Probe bzw. des Körpers untersucht wird.

Erfindungsgemäß wird der feste Körper bildlich, insbesondere durch mindestens eine dreidimensionale bildliche Darstellung dargestellt. Eine bildliche Darstellung, insbesondere dreidimensionale bildliche Darstellung im Sinne der Erfindung kann insbesondere sein, eine computertomografische bildliche Darstellung und/oder eine kernspintomographische Darstellung und/oder eine dreidimensionale bildliche Darstellung, basierend auf 3D-Bildsynthese aus 2D-Probenschnittbildern, einem sogenannten 3-D Bildgebungsverfahren.

Vorzugsweise wird der feste Körper in einem 3-D Bildgebungsverfahren abgebildet. Vorzugsweise werden dabei zuerst 2-D-Probenschnittbilder durch eine Rotation des festen Körpers in einem entsprechenden Aufnahmegerät erzeugt, weiter insbesondere 2-D Körperschnitte bildlich aufgenommen. In diesem Zusammenhang sind 2-D Körperschnitte, als Dünnschichtschnitte, insbesondere wenige Mikrometer (µm) dick, weiter insbesondere kleiner als 5 µm und/oder kleiner als 2 µm und/oder nicht größer als 20 µm, des dreidimensionalen festen Körpers zu verstehen. Insbesondere werden diese zweidimensionalen bildlichen Teildarstellungen des festen Körpers anschließend, insbesondere mittels Computer unterstützter 3-D Bildsynthese, zu einem dreidimensionalen Bild zusammengefügt, wodurch insbesondere ein digitales Volumen des dreidimensionalen festen Körpers entsteht.

Vorzugsweise wird mindestens ein Bildgebungsparameter und oder mindestens eine Bildaufnahmeeinstellung angepasst, basierend auf dem mindestens einen initiären Pulverkonstrukturparameter. Dabei ist "Anpassen eines Bildgebungsparameters" insbesondere derart zu verstehen, dass eine Bildauflösung und/oder eine Bilderzeugungsauflösung und/oder eine Kontrasteinstellung und/oder eine Akquisitionszeit angepasst wird. Das "Anpassen einer Bildaufnahmeeinstellung" ist insbesondere derart zu verstehen, dass eine Position des festen Körpers und/oder eine Ausrichtung des festen Körpers und/oder eine Orientierung des festen Körpers, insbesondere relativ zur und/oder in der Apparatur zur Erzeugung der bildlichen Darstellung des festen Körpers angepasst wird, weiter insbesondere relativ zu einer Fokusebene zur Erzeugung der bildlichen Darstellung des festen Körpers in der entsprechenden Apparatur. Weiter insbesondere werden die Position einer Quelle und/oder einer Detektionseinrichtung angepasst.

In einer Ausführungsform ist das Verfahren derart, dass mindestens ein makroskopischer Pulverparameter, insbesondere ein Schüttverhalten und/oder mindestens eine Färbung des Pulvers ermittelt wird. Dadurch wird die Untersuchung des Pulvers verbessert.

Als ein makroskopischer Pulverparameter kann ein Schüttverhalten, insbesondere ein Hausner-Faktor und/oder mindestens eine Färbung und/oder ein Kontrast und/oder ein Farbverlauf des Pulvers ermittelt werden. Vorzugsweise kann als der mindestens eine makroskopische Pulverparameter eine Granularität und/oder eine Pulverkorngrößenverteilung, weiter bevorzugt ein makroskopischer Reduktionszustand und/oder ein Oxidationszustand und/oder ein Verunreinigungszustand ermittelt werden.

In einer Ausführungsform ist das Verfahren derart, dass mindestens eine chemische Komponente des Pulvers ermittelt wird. Dadurch wird die Untersuchung des Pulvers verbessert.

Vorzugsweise wird eine chemische Komponente des Pulvers als eine (Element-)Zusammensetzung des Pulvers und/oder ein Oxidationszustand und/oder insbesondere ein Oxidanteil und/oder insbesondere eine chemische Massenanteilzusammensetzung ermittelt, weiter insbesondere wird mindestens eine chemische Kontamination ermittelt und als chemische Komponente ausgegeben.

In einer Ausführungsform ist das Verfahren derart, dass das Verfahren mindestens einen Verfahrenskontrollpunkt aufweist, an dem Pulverkontrollparameter, insbesondere der makroskopische Pulverparameter und/oder die ermittelte chemische Komponente bereitgestellt werden, die analysiert werden und wobei basierend auf dem Ergebnis der Analyse das Verfahren abgebrochen oder fortgesetzt wird. Dadurch kann ein Verfahren ggf. kosteneffizient und/oder ggf. zeitsparend und/oder ggf. frühzeitig unterbrochen werden.

Im Sinne der Anmeldung ist ein Verfahrenskontrollpunkt, vorzugsweise ein Punkt im Verfahrensverlauf, insbesondere am Ende eines Verfahrensschrittes, wenn an diesem Punkt Parameter, sogenannte Pulverkontrollparameter ausgegeben werden können, wodurch das Verfahren fortgesetzt wird oder unterbrochen wird, insbesondere durch den Abgleich der ausgegebenen Pulverkontrollparameter mit einer Pulverkontrollparameterdatenbank.

Vorzugsweise werden der mindestens eine makroskopische und/oder die mindestens eine chemische Komponente als Pulverkontrollparameter verwendet, wodurch am Verfahrenskontrollpunkt, insbesondere dem Punkt zum Zeitpunkt der Gewinnung der entsprechenden Pulverkontrollparameter, das Verfahren, basierend auf dem mindestens einen makroskopischen Pulverparameter und/oder basierend auf der mindestens einen chemischen Komponente, unterbrochen und/oder das Verfahren fortgesetzt wird, insbesondere nach Abgleich des mindestens einen makroskopischen Pulverparameters und/oder der mindestens einen chemischen Komponente mit einer Datenbank, aufweisend mindestens einen makroskopischen Pulverparameter und/oder mindestens eine chemische Komponente. Insbesondere findet eine Datenbank, insbesondere basierend auf der Untersuchung vergleichbarer Pulver, insbesondere basierend auf der Untersuchung von "gleichen" Pulvern, insbesondere von gleichen und/oder gleichartigen Pulvern aus unterschiedlichen Chargen, weiter insbesondere verschiedenen Teilmengen eines Pulvers aus einer Charge.

In einer Ausführungsform ist das Verfahren derart, dass das Ermitteln des makroskopischen Pulverparameters ein Bildgebungsverfahren beinhaltet. Dadurch ist ein makroskopischer Pulverparameter auf einfache Art und Weise zu ermitteln und die Untersuchung des Pulvers wird verbessert.

Vorzugsweise werden als Bildgebungsverfahren zum Ermitteln des makroskopischen Pulverparameters im erfindungsgemäßen Verfahren ein fotografisches Bildgebungsverfahren und/oder ein lichtmikroskopisches Bildgebungsverfahren und/oder ein Videoaufnahmeverfahren eingesetzt. In weiter bevorzugter Weise wird aus den aufgezählten Bildgebungsverfahren, insbesondere in computerunterstützter, insbesondere in vollautomatisierter Weise mindestens ein makroskopischer Pulverparameter ermittelt und ausgegeben. Nicht im Sinne eines Bildgebungsverfahren zum Ermitteln des makroskopischen Pulverparameters kommen insbesondere Elektronenmikroskopie und/oder AFM-Mikroskopie zum Einsatz.

In einer Ausführungsform ist das Verfahren derart, dass basierend auf dem Bildgebungsverfahren chemische und/oder physikalische und/oder geometrische Parameter ermittelt und ggf. gespeichert werden. Auf diese Weise wird die Untersuchung des Pulvers verbessert.

Vorzugsweise werden als chemische Parameter, ein Oxidationsparameter und/oder ein Korrosionsparameter ermittelt und gegebenenfalls ausgegeben. In weiter bevorzugter Weise werden als physikalische Parameter Pulverdichteparameter und/oder insbesondere Feuchtigkeitsparameter und/oder insbesondere makroskopisch erfassbare Pulverstrukturparameter ermittelt und gegebenenfalls ausgegeben. In weiter bevorzugter Weise werden als geometrische Parameter insbesondere ein Pulverkörnungsparameter und/oder insbesondere ein Pulverkornmorphologieparameter und/oder insbesondere ein Grob-/Feinkörnigkeitsparameter ausgegeben.

Vorzugsweise ist das Verfahren derart, dass die chemischen und/oder physikalischen und/oder geometrischen Parameter Pulverkontrollparameter sind. Dadurch kann ein Verfahren ggf. kosteneffizient und/oder ggf. zeitsparend und/oder ggf. frühzeitig unterbrochen werden.

Vorzugsweise wird mindestens ein chemischer und/oder physikalische und/oder geometrischer Parameter als Pulverkontrollparameter verwendet, wodurch am Verfahrenskontrollpunkt, insbesondere dem Punkt zum Zeitpunkt der Gewinnung der entsprechenden Pulverkontrollparameter, das Verfahren, basierend auf mindestens einem chemischen und/oder mindestens einem physikalischen und/oder mindestens einem geometrischen Parameter, unterbrochen und/oder das Verfahren fortgesetzt wird, insbesondere nach Abgleich des mindestens einen chemischen und/oder mindestens einen physikalischen und/oder mindestens einen geometrischen Parameters mit einer Datenbank, aufweisend mindestens einen chemischen und/oder mindestens einen physikalischen und/oder mindestens einen geometrischen Parameter, insbesondere einer Datenbank wie zuvor definiert.

In einer Ausführungsform ist das Verfahren derart, dass das Pulver zumindest zeitweise in eine flüssige Form für eine chemische Aufbereitung und/oder eine chemische Analyse überführt wird. Dies vereinfacht die Durchführung des Verfahrens.

Vorzugsweise ist im Sinne der Erfindung unter "zeitweise" zu verstehen, dass das Pulver für den Verlauf der chemischen Aufbereitung und oder der chemischen Analyse in eine flüssige Form überführt wird, insbesondere durch Schmelzen und/oder Schmelzaufschließen in flüssige Form überführt wird. Weiter bevorzugt wird eine chemische Aufbereitung und/oder eine chemische Analyse an einem aus der flüssigen Form, insbesondere einer Schmelze und/oder eines Schmelzausschlusses, hervorgehenden Festkörper, insbesondere einem soliden, weiter insbesondere einem einstückigen Festkörper, weiter insbesondere einem ebenen festen Körper, also insbesondere nicht mehr an einem Pulver durchgeführt.

In einer Ausführungsform ist das Verfahren derart, dass das Pulver mit einem Aufschlussmittel versetzt wird, bevor es, zumindest zeitweise in eine flüssige Form überführt wird. Dies vereinfacht die Durchführung des Verfahrens.

Vorzugsweise wird das Pulver, insbesondere bevor es in eine flüssige Form, insbesondere einen Schmelzaufschluss, übergeht, mit einem Aufschlussmittel, insbesondere mit Lithiumtetraborat, versetzt.

In einer Ausführungsform ist das Verfahren derart, dass bei der Bestimmung chemischer Komponenten diese chemischen Komponenten simultan vermessen werden. Dies vereinfacht die Durchführung des Verfahrens.

Vorzugsweise werden der Gehalt aller chemischen Elemente mit einer höheren Ordnungszahl als der von Na qualitativ und quantitativ bestimmt, insbesondere mit einer Nachweisgrenze und/oder Messgenauigkeit von insbesondere mindestens 1 ppm und/oder von mindestens 3 ppm und/oder höchstens 20 ppm und/oder höchstens 50 ppm. Dabei sind insbesondere die Nachweisgrenze und/oder Messgenauigkeit elementabhängig und insbesondere die Höchstwerte sind hier als unterste mögliche Nachweisgrenze und/oder Messgenauigkeit für mindestens eines der Elemente zu verstehen.

Weiter vorzugsweise erfolgt die Bestimmung der chemischen Komponenten, insbesondere der im Pulver enthaltenen chemischen Elemente, insbesondere aller detektierbaren chemischen Elemente simultan, also insbesondere gleichzeitig. Dies ist insbesondere zu verstehen derart, dass nur ein Verfahrensschritt angewendet wird, um den Gehalt aller detektierbaren Elemente, insbesondere aller Elemente mit einer Ordnungszahl größer als der des Na, im Pulver zu bestimmen.

Insbesondere können die chemischen Komponenten, insbesondere die chemische (Element-)Zusammensetzung als Pulverkontrollparameter fungieren.

In einer Ausführungsform ist das Verfahren derart, dass die chemische Analyse eine Bestimmung des Wassergehalts des Pulvers aufweist. Dies verbessert die Untersuchung des Pulvers.

Vorzugsweise wird der Wassergehalt des Pulvers in Gewichtsprozent ermittelt, weiter bevorzugt in ppm. Weiter bevorzugt wird die Pulverprobe in einem Ofen erhitzt, und insbesondere über eine Gasleitung in ein Reagenz, insbesondere in ein Karl Fischer Reagenz, geleitet. Bevorzugter Weise wird der Wassergehalt mit einer Nachweisgrenze und/oder Messgenauigkeit von mindestens 20 ppm und/oder mit einer Nachweisgrenze und/oder Messgenauigkeit von mindestens 10 ppm und oder höchstens 30 ppm. Hier ist "höchstens" derart zu verstehen, dass es einen oberen Zahlenwert einer unteren Grenze eines Bereichs der Detektierbarkeit für den Wassergehalt des Pulvers darstellt.

Insbesondere kann der Wassergehalt als Pulverkontrollparameter fungieren.

In einer Ausführungsform ist das Verfahren derart, dass die chemische Analyse die Bestimmung eines Gehalts von Nichtmetallen aufweist. Dies bietet die zuvor angeführten Vorteile.

Weiter bevorzugt wird der Gehalt von Nichtmetallen im Pulver, insbesondere C, S, O, N und H, ermittelt. Insbesondere wird der Gehalt der nicht Metalle C, S, O, N und H, basierend auf legierungsabhängigen Normen, durchgeführt, insbesondere für Titanlegierungen sind diese, ASTM E1409-13, ASTM E1447-09, ASTM E1941-10. In bevorzugter Weise wird die Pulverprobe induktiv in einem Gasstrom, insbesondere induktiv über die Schmelztemperatur aufgeheizt und die dadurch freigesetzten Gase werden auf ihren Nichtmetallgehalt quantifiziert, insbesondere mit einer Nachweisgrenze und/oder Messgenauigkeit von mindestens 1 ppm und/oder mindestens 2 ppm und oder höchstens 5 ppm quantifiziert. Hier ist "höchstens" derart zu verstehen, wie zuvor definiert.

Vorzugsweise werden durch die Bestimmung eines Gehalts von Nichtmetallen unbekannte Pulverkomponenten ermittelt.

Insbesondere kann der Nichtmetallgehalt als Pulverkontrollparameter fungieren.

In einer Ausführungsform ist das Verfahren derart, dass der Schritt der chemischen Aufbereitung und chemischen Untersuchung eine spektroskopische Analyse beinhaltet.

Vorzugsweise wird eine spektroskopische Analyse, insbesondere eine Röntgenfluoreszenzanalyse, insbesondere eine absorptionsspektroskopische Analyse, weiter insbesondere eine NMR (engl "nuclear magnetic resonance")-Spektroskopie durchgeführt.

Vorzugsweise wird eine Röntgenfluoreszenzanalyse nach DIN 51418, insbesondere an einer nach Schmelzaufschluss erzeugten Probe, durchgeführt.

In einer Ausführungsform ist das Verfahren derart, dass eine initiäre Kleinmenge mindestens ungefähr 50 Pulverkörner und/oder mindestens ungefähr 100 Pulverkörner und/oder höchstens ungefähr 500 Pulverkörner und/oder höchstens ungefähr 1000 Pulverkörner umfasst. Hier ist "ungefähr" wie zuvor definiert zu verstehen.

In einer Ausführungsform ist das Verfahren derart, dass die zweidimensionale bildliche Darstellung an einer zumindestens weitestgehenden zweidimensionalen Präparation der initiären Kleinmenge der Pulverkörner des Pulvers ausgeführt wird.

Im Sinne der Erfindung ist unter einer "weitestgehend zweidimensionalen Präparation" insbesondere eine Monolage, also insbesondere nur aus einer einzelnen Lage von Pulverkörnern und/oder Partikeln aus dem Pulver bestehenden Schicht, insbesondere auf einem entsprechenden Träger, zu verstehen, insbesondere auf einem Kohlenstoffklebepad.

Bevorzugterweise sind insbesondere mehr als 90 Gewichtsprozent der zu untersuchenden zweidimensionalen Präparation als Monolage von Pulverkörnern und/oder Partikeln aus dem Pulver vorgelegt, insbesondere auf einem Trägerelement vorgelegt.

Weiter bevorzugt ist das Trägerelement ein Kohlenstoffklebepad.

In einer Ausführungsform ist das Verfahren derart, dass die zweidimensionale bildliche Darstellung mindestens eine Vergrößerungsbilddarstellung der Pulverkörner der initiären Kleinmenge aufweist, was die zuvor eingehend aufgeführten Vorteile bietet.

Vorzugsweise ist eine Vergrößerungsbilddarstellung im Sinne der Erfindung eine (raster-)elektronenmikroskopische Bilddarstellung, insbesondere eine bildliche Darstellung in Form einer (elektronenmikroskopischen) Einzelpartikelanalyse und/oder AFM-mikroskopischen Bilddarstellung.

Weiter bevorzugt sind Vergrößerungen von 50:1 bis 20.000:1. Die maximale Vergrößerung beträgt 50.000:1.

Insbesondere nicht im Sinne der Erfindung werden lichtmikroskopische Vergrößerungsbilddarstellungen der initiieren Kleinmenge eingesetzt.

In einer Ausführungsform ist das Verfahren derart, dass, basierend auf der mindestens einen Vergrößerungsbilddarstellung, Formparameter und/oder Zustandsparameter der Pulverpartikel als initiäre/n Pulverkornstrukturparameter erhalten werden. Dadurch wird ein Verfahren zur Untersuchung entsprechend verbessert.

Vorzugsweise werden als Formparameter insbesondere Pulverkorngeometrieparameter und/oder Oberflächenbeschaffenheitsparameter und/oder Volumenabschätzungsparameter erhalten.

Als Satelliten werden Partikel die an die im direkten Volumenvergleich größeren Pulverkörner anhaften, bezeichnet.

Als Agglomerate bezeichnet man miteinander verhaftete, jedoch ohne stoffbündige Verbindung verbundene Pulverpartikel.

Vorzugsweise werden als Zustandsparameter insbesondere Satellitenkonzentrationen und/oder Satellitenauftrittswahrscheinlichkeiten und/oder Satelliten pro Pulverkorn, weiter insbesondere werden Agglomeratmengen und/oder Agglomeratgrößen, insbesondere über die durchschnittliche Menge miteinander agglomerierter Pulverkörner, und/oder freie Pulverkörner pro Agglomeratpulverkörner und/oder Adhäsionsverhaltensparameter erhalten.

In einer Ausführungsform ist das Verfahren derart, dass die zweidimensionale bildliche Darstellung eine simultan zur zweidimensionalen bildlichen Darstellung ablaufende chemische Komponentenbestimmung aufweist. Dies ermöglicht ein einfaches Durchführen des Verfahrens.

Im Sinne der Erfindung ist "simultan" wie zuvor dargestellt zu verstehen. Vorzugsweise findet die chemische Komponentenbestimmung insbesondere gleichzeitig, weiter insbesondere während dem gesamten Verfahrensschritt des Gewinnens der zweidimensionalen bildlichen Darstellung, insbesondere zeitlich überlappend mit einem Teil der Aufnahme der zweidimensionalen bildlichen Darstellung statt.

Vorzugsweise wird als chemische Komponentenbestimmung insbesondere eine Mikrobereichsanalyse durchgeführt, insbesondere bis zu einer elementspezifischen Nachweisgrenze von mindestens 0,3 Massenprozent und/oder von mindestens 0,5 Massenprozent und/oder höchstens 1 Massenprozent. Dabei ist "höchstens" derart zu verstehen, dass es einen größten Zahlenwert einer unteren Nachweisgrenze darstellt.

In einer Ausführungsform ist das Verfahren derart, dass im Verfahren Verunreinigungen aus dem Pulver extrahiert werden und das Extrakt und/oder das aufgereinigte Pulver untersucht werden, insbesondere durch Wiegen untersucht werden, weiter insbesondere durch Rasterelektronenmikroskopie untersucht werden. Dadurch wird ein Verfahren und eine Untersuchung des Pulvers verbessert.

Vorzugsweise ist als Extrahieren insbesondere eine mechanische Trennung, weiter insbesondere eine dichteabhängige Trennung, weiter insbesondere eine Trennung basierend auf magnetischer Wechselwirkung, also insbesondere eine Auftrennung magnetischer vs. unmagnetischer Bestandteile, weiter insbesondere eine Separierung basierend auf chemischer Reinheit, weiter insbesondere basierend auf Trendverfahren die edle von unedlen chemischen Elemente abzutrennen vermögen, zu verstehen.

Weiter bevorzugt wird das aufgereinigte Pulver und/oder das Extrakt gewogen und ein Gewichtsverhältnis daraus gebildet, welches insbesondere als Pulverkontrollparameter fungiert.

Weiter bevorzugt wird, dass das Extrakt und/oder das Pulver einem elektronenmikroskopischen Bildgebungsverfahrensschritt zur Verfügung gestellt wird.

In einer Ausführungsform ist das Verfahren derart, dass das Extrakt der Verunreinigungen entsprechend denen für das Pulver angewandten Untersuchungen oder Teilen der Untersuchungen oder einem Teil der Untersuchungen oder mindestens einem Teil mindestens einer der Untersuchungen, insbesondere mittels zweidimensionaler bildlicher Darstellung untersucht wird, wodurch Aufreinigungsparameter bestimmbar sind.

Vorzugsweise wird das Extrakt denen für das Pulver angewandten Untersuchungen unterzogen, insbesondere bestimmten Teilen der Verfahrensschritte, insbesondere einer chemischen Analyse und/oder einer physikalischen Analyse und/oder einer weiteren Aufeinigung, weiter insbesondere mindestens einer zweidimensionalen bildlichen Darstellung und entsprechender Analyse unterzogen.

Weiter vorzugsweise wird das Extrakt nur einem Teil der Untersuchungen, also insbesondere nicht allen Verfahrensschritten des Verfahrens unterzogen.

Weiter vorzugsweise wird das Extrakt mindestens einem Teil mindestens einer der Verfahrensschritte unterzogen.

Vorzugsweise werden als Aufreinigungsparameter insbesondere chemische Komponenten und oder die Änderung der chemischen Komponenten im Vergleich zur unaufgereinigten Form ausgegeben, insbesondere wird der Gehalt von Nichtmetallen und/oder die Elementzusammensetzung und/oder Oxidations- und/oder Korrosionsparameter ermittelt und gegebenenfalls ausgegeben.

Weiter bevorzugt werden Zustandsparameter und/oder Formparameter und/oder spektroskopische Parameter insbesondere eine Absorption und/oder eine Röntgenfluoreszenz und oder ein Spektrum als Aufreinigungsparameter ermittelt und gegebenenfalls ausgegeben.

In einer Ausführungsform ist das Verfahren derart, dass mindestens ein Schritt des Verfahrens wiederholt wird. Dies erlaubt die Untersuchung weiter zu präzisieren.

Vorzugsweise wird insbesondere an einem Verfahrenskontrollpunkt, weiter insbesondere nach einer Aufreinigung eine Pulverprobe, insbesondere in Form einer Kleinmenge und/oder in Form einer statistisch validierbaren Pulverrepräsentation in einen vorhergehenden Schritt des Verfahrens rückgeführt und mindestens dieser Schritt des Verfahrens wiederholt.

In einer Ausführungsform ist das Verfahren derart, dass die Aufreinigungsparameter dazu benutzt werden, das Pulver aufzureinigen. Dies verbessert eine Aufbereitung des Pulvers.

Vorzugsweise wird das Pulver aufgereinigt, wie zuvor beschrieben. Weiter vorzugsweise kann das Pulver, insbesondere durch Anwenden chemischer Reaktionen und/oder chemischer Aufreinigung, aufgereinigt werden. Insbesondere können chemische Reaktionen zur Aufreinigung des Pulvers Redoxreaktionen und/oder Oxidationen und/oder Reduktionen sein.

Vorzugsweise werden die Aufreinigungsparameter dazu benutzt, das Pulver aufzureinigen, also insbesondere einen auf Reinigungserfolg zu quantifizieren und oder zu qualifizieren. Weiter Insbesondere werden die auf Reinigungsparameter dazu benutzt, das Pulver gegebenenfalls weiter aufzureinigen, also insbesondere bei nicht ausreichendem Aufreinigungserfolg, durch Rekursion und/oder Wiederholung bestimmter Verfahrens- und/oder Aufreinigungsschritte die Aufreinigung weiter zu verbessern. Vorzugsweise dienen die Aufreinigungsparameter, insbesondere die Pulverkontrollparameter einer Bewertung der Aufreinigungsqualität, insbesondere quantitativ und/oder qualitativ.

In einer Ausführungsform ist das Verfahren derart, dass eine statistisch validierbare Pulverrepräsentation mindestens 100 Pulverkörner und/oder mindestens 1000 und/oder höchstens 1 000 000 Pulverkörner und/oder insbesondere nicht mehr als 10 000 000 Pulverkörner umfasst. Dies ermöglicht eine verbesserte Untersuchung des Pulvers.

In einer Ausführungsform ist das Verfahren derart, dass der feste Körper aus Kunststoff ausgebildet wird. Dies verbessert ein Untersuchen/eine Untersuchung des Pulvers.

Erfindungsgemäß ist der feste Körper aus Zweikomponentenkunststoff/-harz ausgebildet. Weiter insbesondere kann der feste Körper derart ausgebildet sein, dass er zeitweise ein fester Körper ist, insbesondere für die Zeit der Durchführung des Verfahrens ein fester Körper ist.

Erfindungsgemäß ist das Verfahren derart, dass bei der Herstellung des festen Körpers mindestens eine Vorläuferstufe des festen Körpers mit Ultraschall beaufschlagt wird. Dies ermöglicht die Partikel im festen Körper zu vereinzeln und damit isoliert von Wechselwirkungen mit anderen Partikeln zu analysieren. Dies verbessert ein Untersuchen und/oder eine Untersuchung des Pulvers.

Erfindungsgemäß ist die Vorläuferstufe insbesondere eine Komponente eines Zweikomponentenkunststoffes in seiner flüssigen Form. Weiter insbesondere ist die Vorläuferstufe eine viskose Masse.

Erfindungsgemäß findet die Beaufschlagung mit Ultraschall statt, während die Vorläuferstufe in flüssiger Form vorliegt, also insbesondere zu einer Zeit, in der die Vorläuferstufe in flüssiger Form vorliegt. Vorzugsweise findet die Beaufschlagung mit Ultraschall der flüssigen Vorläuferstufe statt, bis die Pulverkörner vereinzelt und/oder homogen verteilt in der flüssigen und/oder viskosen Vorläuferstufe vorliegen. Weiter vorzugsweise wird die Beaufschlagung mit Ultraschall unterbrochen und oder abgeschaltet, wenn die Vereinzelung und/oder Homogenisierung der Pulverpartikel in der flüssigen und/oder viskosen Vorläuferstufe erfolgt ist und insbesondere, wenn eine Reagglomerisation und Zusammenballung der Partikel langsamer erfolgt, als ein Übergang der flüssigen und/oder viskosen Vorläuferstufe zu einem festen Körper.

In einer Ausführungsform ist das Verfahren derart, dass bei der Herstellung des festen Körpers die Vorläuferstufe zu einer Zeit mit Ultraschall beaufschlagt wird, in der sich die Vorläuferstufe zu einem festen Körper ausbildet. Dies verbessert ein Untersuchen/eine Untersuchung des Pulvers.

Vorzugsweise wird bei der Herstellung des festen Körpers die Vorläuferstufe zu einer Zeit mit Ultraschall beaufschlagt, in der sich die Vorläuferstufe insbesondere zu einem festen Körper ausbildet, insbesondere wird in einem zeitlichen Verlauf der Ausbildung der Vorläuferstufe des festen Körpers zu einem festen Körper, diese mit Ultraschall beaufschlagt. Insbesondere beginnt die Beaufschlagung mit Ultraschall zu einer Zeit, während die Vorläuferstufe noch in einem flüssigen und/oder viskosen Zustand ist und endet insbesondere mit der nahezu abgeschlossenen Ausbildung eines festen Körpers. Insbesondere ist unter einer abgeschlossenen Ausbildung eines festen Körpers zu verstehen, wenn die in die Vorläuferstufe eingebrachten und insbesondere mittels Ultraschall vereinzelten und homogenisierten Partikels, nicht mehr genügend Bewegungsfreiheit haben, um Agglomerate zu bilden und/oder sich zusammenzuballen. Insbesondere ist auch ein Zeitpunkt und/oder ein zeitlicher Verlauf und/oder ein zeitlich modulierter Verlauf unter "einer Zeit der Beaufschlagung" zu verstehen.

Vorzugsweise ist die Herstellung des festen Körpers derart ausgebildet, dass chemische und/oder physikalische Kenngrößen nicht verändert werden.

Weiter insbesondere erfolgt die Herstellung des festen Körpers derart, dass Pulverpartikel nicht zerstört und/oder beschädigt und/oder nennenswert verändert werden. Weiter insbesondere verändert sich dadurch eine Oberflächenbeschaffenheit und/oder ein Volumen und/oder eine Satellitenassoziierung nicht.

In einer bevorzugten Ausführungsform ist das Verfahren derart, dass die bildliche Darstellung des festen Körpers auf einer 3-D Bildgebung (entspricht einem 3-D Bildgebungsverfahren) basiert.

In einer Ausführungsform ist das Verfahren derart, dass der feste Körper durch eine 3D-Bildgebung nicht verändert wird. Dies verbessert ein Untersuchen/eine Untersuchung des Pulvers.

Weiter bevorzugt ist die 3-D Bildgebung für den festen Körper und die darin angeordneten Partikel und/oder Pulverkörner zerstörungsfrei. Insbesondere verändern sich durch die 3-D Bildgebung die physikalischen und/oder chemischen Eigenschaften des Körpers und der darin angeordneten Partikel und/oder Pulverkörner nicht. Weiter insbesondere beeinflussen die 3-D Bildgebung und/oder Messungen am festen Körper die Anordnung der Partikel und/oder Pulverkörner im festen Körper nicht. Vorzugsweise sind die im Verfahren angewandten Schritte, also insbesondere den festen Körper betreffend wiederholbare, insbesondere mehr als 10x weiter insbesondere mehr als 100 x wiederholbare Verfahrensschritte, ohne den festen Körper und/oder der darin angeordneten Partikel und/oder Pulverkörner zu schädigen und/oder in seinen chemischen und/oder physikalischen Eigenschaften zu verändern.

Vorzugsweise ist das Verfahren derart, dass der feste Körper zumindest im Wesentlichen ein Zylinder oder zumindest im Wesentlichen eine Kugel oder zumindest im Wesentlichen ein Quader oder zumindest im Wesentlichen ein Würfel ist.

Dabei ist "zumindest im Wesentlichen ein Zylinder/eine Kugel/ein Quader/ein Würfel" im Rahmen der vorliegenden Erfindung so zu verstehen, dass sich der so entstehende geometrische feste Körper weniger als 30 %, und/oder insbesondere weniger als 20 %, und/oder weiter insbesondere weniger als 10 %, und/oder jedoch nicht mehr als 50 % von den Maßen, insbesondere von den Kantenlängen und/oder insbesondere den Kantenlängenverhältnissen und/oder insbesondere den Flächen und/oder insbesondere den Flächenverhältnissen und/oder insbesondere den Winkeln und/oder insbesondere den Winkelverhältnissen und/oder insbesondere der Sphärizität von denen eines/einer im mathematischen Sinne idealen Zylinders/Kugel/Quaders/Würfels abweicht.

Insbesondere ist der feste Körper ein Zylinder mit mindestens 1 mm Durchmesser, weiter insbesondere mit 10 mm Durchmesser, weiter insbesondere mit höchstens 30 mm Durchmesser und/oder mit höchstens 60 mm Durchmesser, weiter insbesondere mit höchstens 50 mm Durchmesser, weiter insbesondere mit höchstens 40mm Durchmesser, weiter insbesondere mit einer Höhe von höchstens 100 mm Höhe, insbesondere mit einer Höhe von höchstens 80 mm, weiter insbesondere mit höchstens einer Höhe von 50 mm und/oder insbesondere mit mindestens 1 mm Höhe, weiter insbesondere mit mindestens einer Höhe von 10 mm, insbesondere mit einer Höhe von mindestens 40 mm.

Vorzugsweise sind vom Zylinder abweichende geometrische Formen, insbesondere Kugel/Quader/Würfel bemaßt derart, um ein dem zuvor beschriebenen Zylinder entsprechendes Volumen aufzuweisen.

In einer Ausführungsform ist das Verfahren derart, dass die 3D-Bildgebung die Erstellung eines digitalen Volumens des Körpers aufweist. Dies verbessert ein Untersuchen/eine Untersuchung des Pulvers.

Vorzugsweise wird ein digitales Volumen des festen Körpers, also ein digitales Abbild des physisch realen festen Körpers implementiert. Insbesondere weist das digitale Volumen eine digitale Repräsentation der Partikel und/oder Pulverkörner auf, wobei insbesondere die relativen Positionen der Partikel und/oder Pulverkörner im digitalen Volumen im Vergleich zum realphysischen festen Körper erhalten bleibt.

In einer Ausführungsform ist das Verfahren derart, dass mindestens ein Pulverkornstrukturparameter mindestens eine Partikelgröße ist und mindestens ein 3D-Bildgebungsparameter eine Detektionsauflösung ist. Dies verbessert ein Untersuchen/eine Untersuchung des Pulvers.

Vorzugsweise ist die Partikelgröße kleiner als ungefähr 1000 µm und/oder kleiner als ungefähr 200 µm und/oder kleiner als 100 µm, weiter insbesondere größer als ungefähr 1 µm und/oder größer als 10 µm und/oder größer als 25 µm. Auch hier ist "ungefähr", wie zuvor definiert, zu verstehen.

Vorzugsweise kommt als 3-D Bildgebungsparameter eine Detektionsauflösung zum Einsatz. Insbesondere wird eine hochauflösende Computertomografie (CT), insbesondere auch eine Mikro-CT (µCT), durchgeführt. Dabei sind insbesondere zu erreichende Auflösungen von ungefähr kleiner als 100 µm, weiter insbesondere im Bereich von Auflösungen kleiner als ungefähr 30 µm und/oder kleiner als ungefähr 20 µm, besonders bevorzugt kleiner als ungefähr 10 µm und/oder kleiner als ungefähr 5 µm, weiter besonders bevorzugt kleiner als ungefähr 1 µm, insbesondere nicht mehr als ungefähr 150 µm und/oder ungefähr 200 µm zu erreichen. Insbesondere eine präzise Justierung und/oder Ausrichtung der einzelnen Systemkomponenten und/oder der Probe, insbesondere des festen Körpers als Probe, insbesondere relativ Detektionseinrichtung und/oder zur Quelle, sind maßgeblich, für das Erreichen einer für das erfindungsgemäße Verfahren ausreichenden Auflösung. Als Systemkomponenten sind insbesondere die Röntgenröhre und/oder der Detektor und/oder die Drehachse der Probe zu verstehen. Weiter insbesondere kann die Drehachse der Probe eine Hauptachse, insbesondere wie zuvor definiert, und/oder eine Nebenachse, insbesondere wie zuvor definiert, sein. Auch hier ist "ungefähr", wie zuvor definiert, zu verstehen.

Weiter insbesondere wird eine CT- Bremsspektrum, insbesondere entspricht dies einer (Zentral-) Wellenlänge der emittierten Photonen, für die zu erreichende Auflösung angepasst.

Weiter vorzugsweise wird eine CT-Quelleinstellung, insbesondere eine Energie und/oder eine Leistung und/oder eine Bestrahlungsdauer und/oder eine Wellenlänge an die zu erreichende Auflösung angepasst.

Vorzugsweise stellen die Partikel-/Pulverkorngrößen Eingangsgrößen für das Erreichen einer für die Durchführung des Verfahrens notwendigen Auflösung für die (CT-)Untersuchung dar. Weiter insbesondere bilden Morphologieaussagen (über die Partikel/Pulverkörner) die Grundlage für die anzusetzenden Grenzwerte und/oder Toleranzen für die Volumenauswertung (insbesondere eines digitalen Volumens) hinsichtlich von Formfaktoren und/oder Sphärizität. Insbesondere werden die ermittelten Pulverkornstrukturparameter zur Ermittlung und/oder Aufnahme und/oder Auswertungsparametererstellung für die weiteren Verfahrensschritte, insbesondere für die Erstellung und/oder Auswertung einer bildlichen Darstellung des festen Körpers und/oder eines entsprechenden digitalen Volumens herangezogen.

In einer Ausführungsform ist das Verfahren derart, dass mindestens ein Pulverkornstrukturparameter ein Absorptionsverhalten ist und mindestens ein 3D-Bildgebungsparameter eine Quelleneinstellung ist. Dies verbessert ein Untersuchen und/oder eine Untersuchung des Pulvers.

Vorzugsweise ist das Absorptionsverhalten des Pulvers und/oder der initiären Kleinmenge und/oder einer repräsentativen Großmenge, insbesondere einer repräsentativen Menge, die einer statistisch validierbaren Pulverrepräsentation wie zuvor definiert entspricht, und/oder Teilen und/oder einzelnen Komponenten des Pulvers und/oder der initiären Kleinmenge und/oder der repräsentativen Großmenge zu verstehen.

Weiter vorzugsweise ist eine (CT-) Quelleneinstellung eine Energie und/oder eine Leistung und/oder eine Bestrahlungsdauer und/oder Bildaufnahmedauer und/oder eine (Zentral-)Wellenlänge und/oder ein Frequenzspektrum. Insbesondere wird eine Anzahl an Photonen, weiter insbesondere mittlere Anzahl an Photonen angepasst, insbesondere um ein Pixel-Rauschen anzupassen.

In einer Ausführungsform ist das Verfahren derart, dass mindestens eine Kenngröße ein Volumen und/oder eine Fläche und/oder eine Länge ist. Dies verbessert ein Untersuchen und/oder eine Untersuchung des Pulvers.

Vorzugsweise ist mindestens eine Kenngröße eine der folgenden Parameter und/oder Größen und/oder Verhältnisse: insbesondere eine Partikelgröße, insbesondere eine Partikelgrößenverteilung, insbesondere mindestens ein Formfaktor (zum Beispiel eine Sphärizität), insbesondere eine Formfaktorenverteilung, insbesondere die in den Partikeln befindliche Hohlräume (engl. "Hollow Spaces"), weiter insbesondere deren Anzahl und oder deren Verteilung und oder deren Dichte/Anzahl pro Partikel, insbesondere die Anzahl und/oder Konzentration und/oder Verteilung von höherdichten Partikeln (HDP), weiter insbesondere eine Partikeldichteverteilung, insbesondere eine Partikeloberfläche, insbesondere eine Partikeloberflächenverteilung, insbesondere eine Partikellänge, insbesondere ein Partikelvolumen.

Vorzugsweise umfasst das erfindungsgemäße Verfahren eine Makroskopie, eine chemische Analyse, eine rasterelektronenmikroskopische Untersuchung, die Herstellung eines festen Körpers und eine Computertomografie, weiter insbesondere weist das erfindungsgemäße Verfahren nur diese Schritte auf, und benötigt keine weiteren, um zu den Kenngrößen des Pulvers zu gelangen.

Die Aufgabe wird insbesondere auch durch ein Verfahren zur Herstellung eines festen Körpers gelöst, das nicht Teil der Ansprüche ist.

Dabei werden Pulverkörner einer statistisch validierbaren Pulverrepräsentation in eine Vorläuferstufe des festen Körpers, insbesondere eine flüssige Vorläuferstufe eingebracht und anschließend vereinzelt, bzw. der Abstand zu anderen Pulverkörnern, insbesondere einer statistisch realisierbaren Pulverrepräsentation, die in die Vorläuferstufe des festen Körpers eingebracht worden sind. Insbesondere werden die Pulverkörner in der Vorläuferstufe homogener, also gleich dicht in der Vorläuferstufe verteilt, wodurch sie insbesondere bei Ausbildung des festen Körpers aus der Vorläuferstufe homogenisiert verteilt und/oder vereinzelt im festen Körper vorliegen. Diese Beabstandungen und/oder Vereinzelung und/oder Homogenisierung findet durch Vereinzelungsmittel, insbesondere durch Dispergiermittel und/oder durch Netzmittel und/oder durch Beaufschlagung mit Ultraschall und/oder durch mechanische Mittel, insbesondere durch Schüttelmittel und/oder durch Rührmittel statt. Der zeitliche Ablauf und/oder die zeitliche Abfolge (bei Wirken von mindestens zwei Vereinzelungsmitteln) der Anwendung des mindestens einen wirkenden Vereinzelungsmittels kann wie zuvor beschrieben stattfinden.

Die Aufgabe wird insbesondere auch durch das erfindungsgemäße Verfahren zur Aufbereitung und zur Untersuchung eines Pulvers mittels instrumenteller Analytik nach Anspruch 1 gelöst. Vorzugsweise findet insbesondere die Vereinzelung und/oder Beabstandung und oder Homogenisierung simultan zur Fixierung, also insbesondere simultan zur Ausbildung des festen Körpers aus der Vorläuferstufe statt. Weiter insbesondere wirken die Vereinzelungsmittel nur auf die Vorläuferstufe des festen Körpers, insbesondere wirken die Vereinzelungsmittel auf die Vorläuferstufe und den sich ausbildenden festen Körper. Das Wirken der Vereinzelungsmittel zu einer Zeit ist dabei als Zeitpunkt, also insbesondere als kurzzeitiges Wirken, insbesondere bis zu einer erfolgten Vereinzelung und/oder Homogenisierung der Partikel zu verstehen. Insbesondere, wenn eine Reagglomerisation der Partikel schneller verläuft als eine Ausbildung zu einem festen Körper aus einer Vorläuferstufe kann insbesondere simultanes Einwirken der Vereinzelungsmittel über einen zeitlichen Verlauf, insbesondere eine lange und/oder längere Zeitperiode, insbesondere während der gesamten Zeitperiode der Ausbildung der Vorläuferstufe des festen Körpers, zu einem festen Körper, stattfinden.

Vorzugsweise kann ein und/oder mehrere Vereinzelungsmittel in der oben beschriebenen Art wirken, insbesondere simultan und/oder zeitlich zueinander versetzt, weiter insbesondere zeitlich nicht überlappend und/oder insbesondere zeitlich teilweise überlappend, wirken. Nicht erfindungsgemäß kann die Ausbildung des festen Körpers, insbesondere spontan, insbesondere über einen passiven Trocknungsprozess, erfolgen. Weiter nicht erfindungsgemäß kann das Ausbilden eines festen Körpers initiiert werden durch einen aktiven Trocknungsprozess, insbesondere durch einen heizungsgestützten und/oder kühlungsgestützten Trocknungsprozess, stattfinden. Erfindungsgemäß kann durch die Zugabe eines Primers und/oder eines Reaktionsstarters eine Aushärtung intiiert werden und erfolgen. Insbesondere entspricht dies einem aktiven chemischen Starten. Weiter insbesondere kann durch einen aktiven physikalischen Start, insbesondere durch einen Mischprozess, insbesondere durch Mischen einer ersten Komponente mit einer zweiten Komponente erfolgen.

Nicht erfindungsgemäß kann das Ausbilden eines festen Körper auch aktiv durch das Einwirken mechanischer Mittel erfolgen. Weiter insbesondere kann es auch eine Mischung der verschiedenen aktiven Startprozesse geben.

Weiter insbesondere wird die Aufgabe der Erfindung gelöst durch die Verwendung eines Körpers der eine Vielzahl von vereinzelt im Körper vorliegender Pulverkörner einer statistisch validierbaren Pulverrepräsentation von Pulverkörnern eines Pulvers aufweist, insbesondere für die Verwendung in einem Verfahren zur Aufbereitung und zur Untersuchung eines Pulvers mittels instrumenteller Analytik.

Weitere Ausführungsformen der Erfindung ergeben sich aus den Unteransprüchen.

Nachfolgend wird die Erfindung anhand eines Ausführungsbeispiels beschrieben, dass anhand der Abbildungen näher erläutert wird. Hierbei zeigen:
- Fig. 1: eine schematische Darstellung eines Verfahrens zur Aufbereitung und zur Untersuchung eines Pulvers mittels instrumenteller Analytik
- Fig. 2: eine schematische Darstellung eines Verfahrens zur Herstellung eines festen Körpers
- Fig. 3: eine 2-D Schnittbildextraktion und 3-D Bildsynthese basierend auf 2-D Schnittbildern zur Erstellung eines digitalen Volumens und Auswahl eines Teilvolumens des digitalen Volumens
- Fig. 4 a: eine Übersicht über 2-D Schnittbilder und ein daraus resultierendes digitales Volumen eines festen Körpers nach einem Verfahren im Stand der Technik

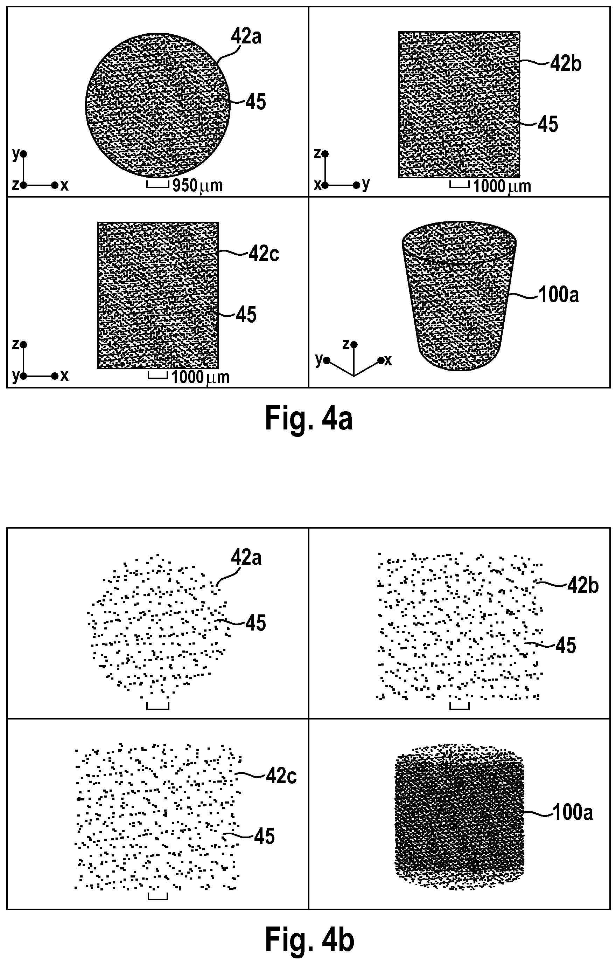

- Fig. 4 b: eine Übersicht über 2-D Schnittbilder und ein daraus resultierendes digitales Volumen eines festen Körpers nach einem erfindungsgemäßen Verfahren

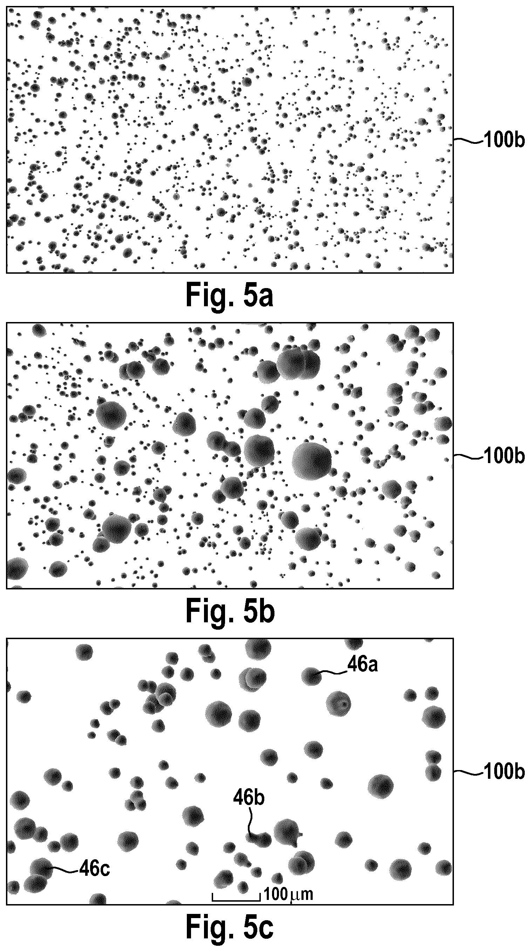

- Fig. 5: Übersicht über verschiedene digitale Teilvolumen eines digitalen Volumens eines festen Körpers nach einem erfindungsgemäßen Verfahren
- Fig. 5 a: ein großes digitales Teilvolumen
- Fig. 5 b: ein mittelgroßes digitales Teilvolumen
- Fig. 5 c: ein kleines digitales Teilvolumen

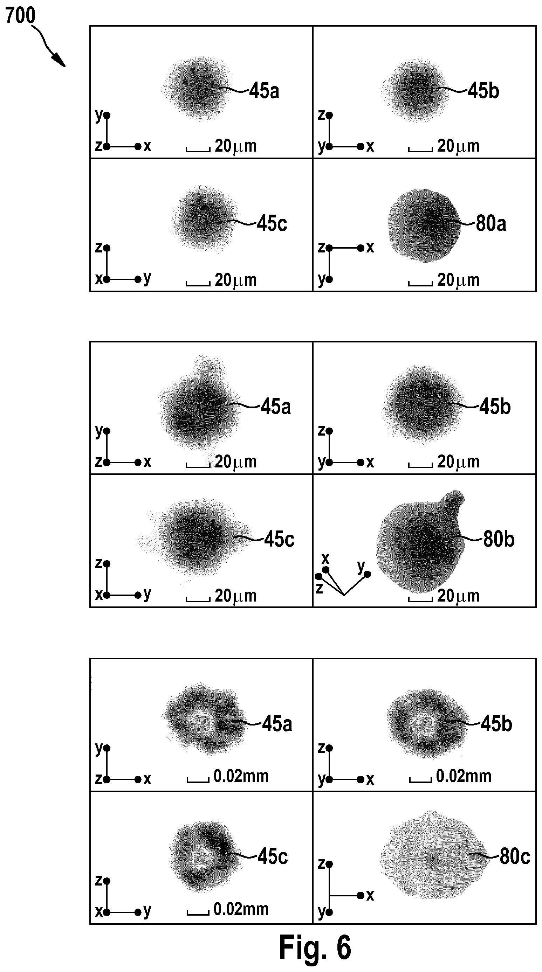

- Fig. 6: 3-D-Bildsynthese vereinzelter Pulverkörner

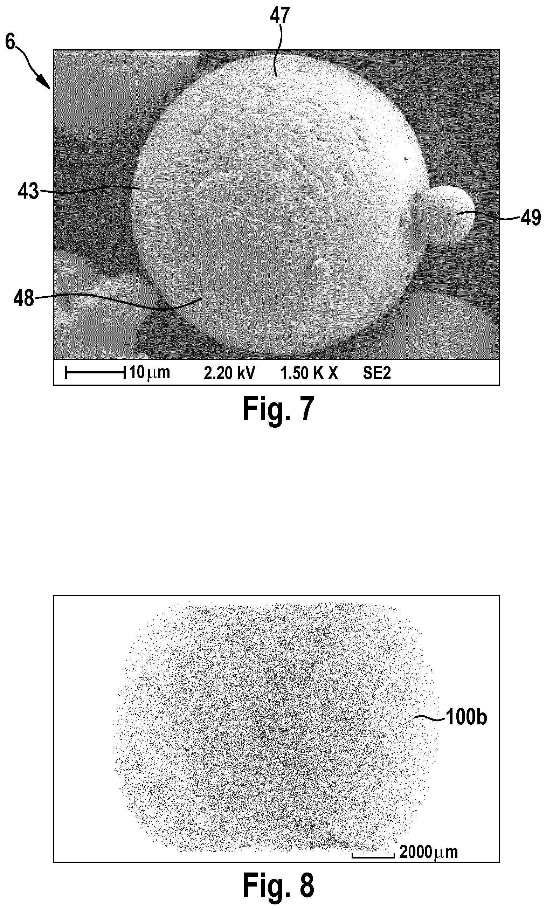

- Fig. 7: eine rasterelektronenmikroskopische (REM-)Aufnahme einer 2-D Präparation eines Pulverkorns
- Fig. 8: ein digitales Teilvolumen, welches einem dünnen Querschnitt, senkrecht zur Rotationsachse des festen Körpers mit 10 mm Durchmesser entspricht

In der nachfolgenden Beschreibung werden für gleiche und gleichwirkende Teile dieselben Bezugsziffern verwendet.

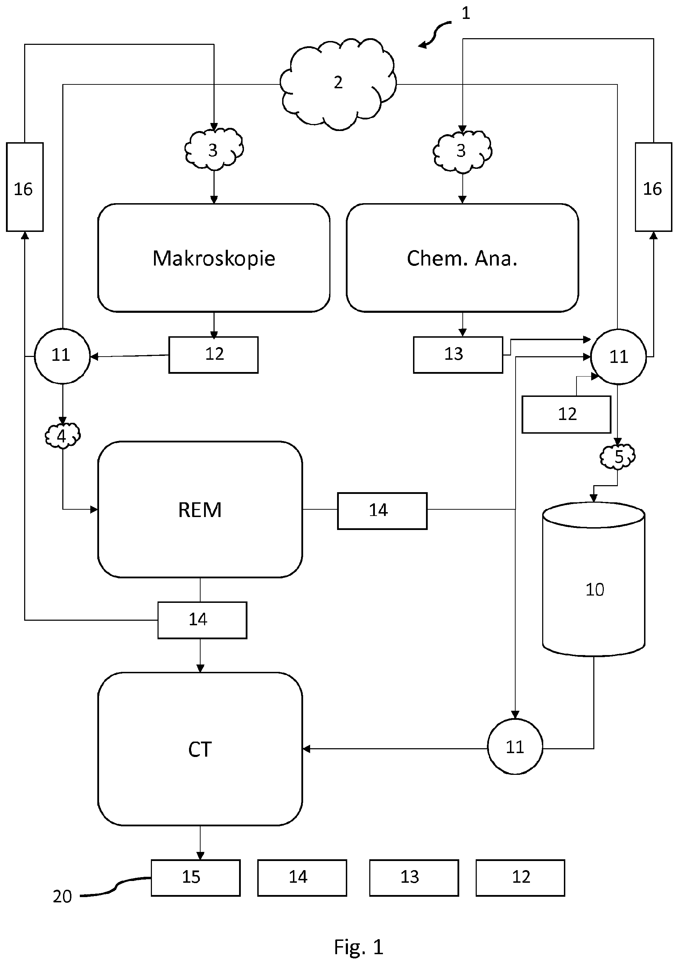

**Fig. 1** zeigt eine schematische Darstellung eines Verfahrens 1 zur Aufbereitung und zur Untersuchung eines metallischen/metalllegierungsbasierten Pulvers, mittels instrumenteller Analytik nach einem nicht erfindungsgemäßen Ausführungsbeispiel. Das Verfahren ist dazu geeignet, alle Metalle abzubilden. Die Dichten entsprechen dabei den üblichen Metallen von Magnesium (1,7 g/cm³) bis aus Medium (22,6 g/cm³), bzw. allg. größer 1,5 g/cm³.

Dabei können handelsübliche Pulver mit einer mittleren Partikelgröße zwischen 10 und 100 µm aufbereitet und untersucht werden.

Aus der Gesamtheit des Pulvers 2 wird eine Pulverprobe 3, also eine kleine Menge des Pulvers für eine Untersuchung mittels Makroskopie und chemischer Analyse entnommen. Diese Pulverprobe 3 wird der Makroskopie und/oder der chemischen Analyse zugeführt. Die chemische Analyse liefert chemische Komponenten 13, die im Pulver vorliegen, bzw. aus denen das Pulver teilweise besteht, darunter den Nichtmetallgehalt (N, C, O, H), sowie einen Oxidanteil. Dazu wird das Pulver der Probe 3 aufgeschmolzen und zu einem ebenen flachen Körper erstarrt und anschließend wird dieser ebene flache Körper einer Röntgenfluoreszenzspektroskopieanalyse unterzogen. Die Makroskopie liefert makroskopische Pulverparameter 12, darunter einen Hausner-Faktor, einen Korrosionsgrad und einen Oxidationsgrad. Der Abschluss der Makroskopie und/oder der chemischen Analyse stellt einen Verfahrenskontrollpunkt 11 dar. Wenn die chemischen Komponenten 13 und/oder makroskopischen Pulverparameter 12 den Vorgaben entsprechen und/oder darauf schließen lassen, dass das Pulver prozessfähig ist, nach Abgleich mit einer Datenbank, wird das Verfahren fortgesetzt.

Bei Fortsetzung des Verfahrens wird der Gesamtheit des Pulvers 2 eine initiäre Kleinmenge 4 entnommen und einer rasterelektronenmikroskopischen Untersuchung unterzogen. Dazu werden die Partikel der initiären Kleinmenge 4 auf ein Kohlenstoffklebepad aufgebracht und dieses einem Rasterelektronenmikroskop (REM) zugeführt. Die rasterelektronenmikroskopische Untersuchung liefert initiäre Pulverkornstrukturparameter, darunter eine initiäre Sphärizität, ein initiäres Pulverkornvolumen, sowie eine initiäre Pulverkornlänge. Der Abschluss der RE-Untersuchung stellt wieder einen Verfahrenskontrollpunkt 11 dar, an dem basierend auf den initiären Pulverkornstrukturparametern, das Verfahren entweder fortgesetzt oder abgebrochen wird. Bei Fortsetzen des Verfahrens, werden die initiären Pulverkornstrukturparameter 14 einer Computertomografie Apparatur CT zugeführt, wodurch die Messparameter und weitere Einstellungen der Computertomografie Apparatur CT, basierend auf den initiären Pulverkornstrukturparametern 14, dahingehend angepasst, dass die Detektorposition und/oder Probenposition und/oder Quelleneinstellungen, etwa die Emissionsleistung verändert werden, um das Rauschen zu minimieren und die Auflösung zu maximieren. Die Emissionsleistung, also die Anzahl der emittierten Photonen aus der Quelle wird für die Durchführung des computertomografischen Verfahrens in Bezug auf das gewünschte Rauschen optimiert. Wenn das Rauschen steigt, steigen die Abweichungen von Durchmesser- und Formwerten. Für diese Werte ist daher ein möglichst geringes Rauschen angestrebt. Andererseits steht eine gewünschte Auflösung und damit zusammenhängend niedriges Rauschen mit einer ökonomischen Durchführung des Verfahrens im Wettbewerb. Für geometrische Maße, wie etwa die Pulverkorndurchmesser und/oder Pulverkornlänge, erhöht eine hohe Auflösung die Messgenauigkeit, während sie bei Formmessungen, etwa der Sphärizität, Messabweichungen bedingt. Daher werden die initiären Pulverkornstrukturparameter zur Einstellung der computertomografischen Apparatur CT, um das Rauschen und die Auflösung für die Untersuchung des entsprechenden Pulvers zu optimieren, herangezogen. Die Einstellungen und Anpassungen in der computertomografischen Apparatur finden automatisiert statt.

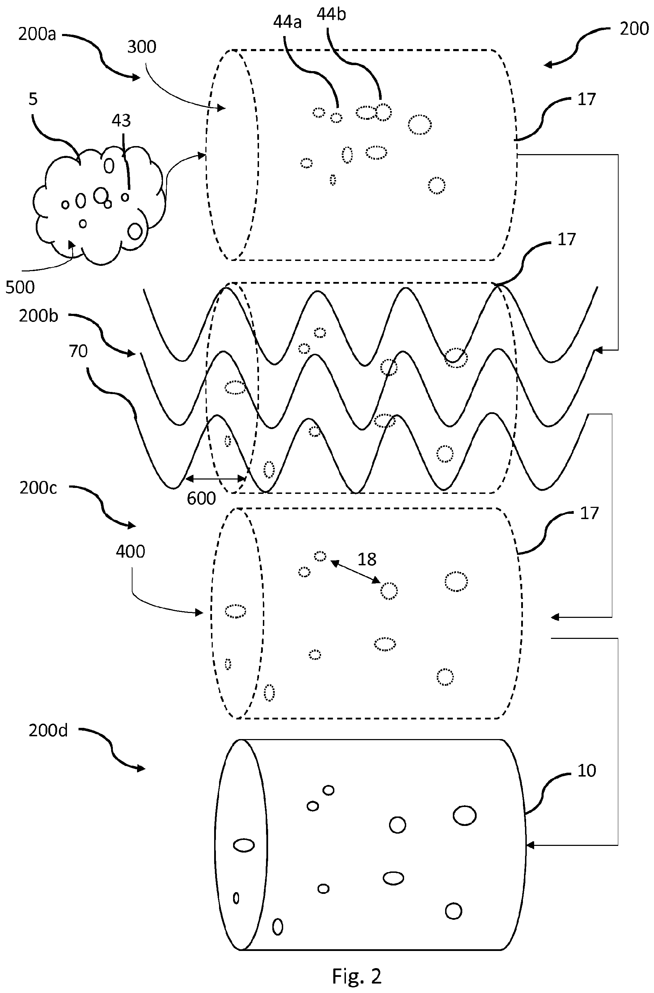

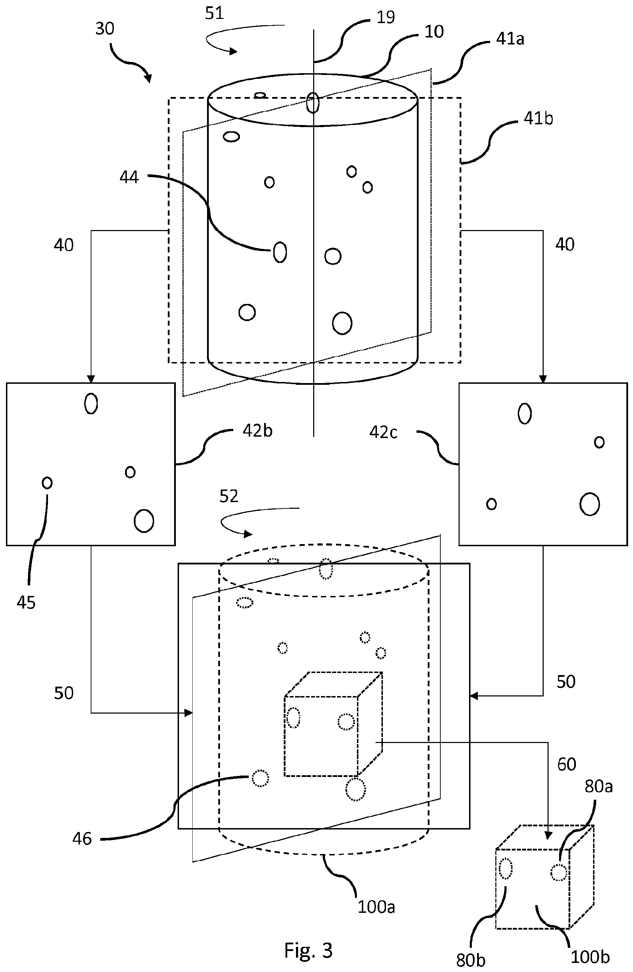

Alternativ zu einem Abbrechen des Verfahrens, wenn an einem Verfahrenskontrollpunkt 11 die makroskopischen Pulverparameter 12 und/oder die chemischen Komponenten 13 und/oder die initiären Pulverkornstrukturparameter 14 nicht den Vorgaben entsprechen und/oder nach Abgleich mit einer entsprechenden Datenbank, das Abbrechen des Verfahrens bedingen würden, wird das Pulver, die Gesamtheit des Pulvers 2 und/oder die Pulverprobe 3 und/oder die initiäre Kleinmenge 4 und/oder die statistisch validierbare Pulverrepräsentation 5, einem Aufreinigungsschritt 16 zugeführt. Durch Sieben werden mechanische Eintragungen ins Pulver, aber auch Pulverkörner die zu groß sind, entfernt. Diese abgetrennten Bestandteile des Pulvers werden gewogen, und mit dem Gewicht des aufgeregten Pulvers verglichen um einen Verunreinigungsgrad zu bestimmen. Auch werden diese Verunreinigungen, bzw. Eintragungen und oder zu großen Pulverkörner den hier beschriebenen Verfahrensschritten zugeführt (nicht gezeigt). Anschließend wird das Pulver wieder der Makroskopie und/oder der chemischen Analyse zugeführt, um erneut die makroskopischen Pulverparameter und/oder chemischen Komponenten und/oder initiären Pulverkornstrukturparameter zu bestimmen. Am Verfahrenskontrollpunkt 11 bedingen diese Parameter des aufgereinigten Pulvers, das Fortsetzen und oder Abbrechen und/oder einen weiteren Aufreinigungsschritt des Verfahrens. Damit ergibt sich eine rekursive Möglichkeit, das Pulver weiter aufzureinigen, bis schließlich der Verfahrenskontrollpunkt 11 positiv passiert wird und das Verfahren fortgesetzt wird. Wenn an den Verfahrenskontrollpunkten 11 die makroskopischen Pulverparameter 12, die chemischen Komponenten 13 und die initiären Pulverkornstrukturparameter 14 ein Fortsetzen des Verfahrens bedingen, wird aus der Gesamtheit des Pulvers 2 eine statistisch validierbare Pulverrepräsentation 5 entnommen. Aus dieser wird ein fester Körper 10 hergestellt (siehe **Fig. 2**). Dieser feste Körper 10 wird in eine Computertomografie Apparatur CT überführt und mittels Computertomografie werden weitere Kenngrößen 20, darunter Partikelgröße, Partikelgrößenverteilung, Sphärizität, Formfaktorenverteilung, HDP, sowie Partikeloberflächenbeschaffenheit ermittelt und ausgegeben (siehe **Fig. 3** und **Fig. 6****).**

Die statistisch validierbare Pulverrepräsentation 5 wird mit einem Dispergiermittel 500 versetzt und zur Herstellung 200 eines festen Körpers 10, wie in **Fig. 2** dargestellt, in eine flüssige Vorläuferstufe 17 eines festen Körpers 10 eingebracht 200a, die eine erste Komponente 300 eines Zweikomponentenharzes umfasst. Die Pulverkörner 43 der statistisch validierbaren Pulverrepräsentation 5 ordnen sich in der flüssigen Vorläuferstufe 17 nicht statistisch verteilt an, da sie durch Wechselwirkungen aneinanderbinden und zur Agglomeration neigen. Dabei gibt es zwar, durch das Dispergiermittel verursacht, bereits vereinzelt vorliegende Pulverkörner 44 a, aber größtenteils liegen sie noch in Form von Agglomerationen 44 b in der flüssigen Vorstufe vor. Darüber hinaus sind die Pulverkörner 44 nicht homogen in der flüssigen Vorläuferstufe 17 verteilt. Aus diesem Grund wird die flüssige Vorläuferstufe 17 mit Ultraschall 70 beaufschlagt 200 b und gleichzeitig geschüttelt, entlang einer Hauptschüttelrichtung 600. Dadurch nimmt der Pulverkornabstand 18 im statistischen Mittel zu. Die Beaufschlagung des Ultraschalls 70 sowie das Schütteln entlang einer Hauptschüttelrichtung 600 wird eingestellt, wenn die Partikel vereinzelt vorliegen. Anschließend erfolgt die Aushärtung 200 c der flüssigen Vorläuferstufe 17, durch Zugabe einer zweiten Komponente eines Zweikomponentenharzes 400. Dadurch formt sich 200 d der feste Körper 10.

Der feste Körper 10 wird in eine Computertomografie Apparatur CT überführt (siehe auch **Fig. 1**) und wie in **Fig. 3** dargestellt, mittels 3-D Bildgebung 30 in einem digitalen Volumen 100 a, abgebildet. Dazu wird der feste Körper 10 um eine Rotationsachse 19 in einer Rotationsrichtung 51 rotiert, während entlang von 2-D Schnittbildebenen 41, senkrecht 41 a zur Rotationsachse 19 und parallel 41 b, 41 c zur Rotationsachse 19 2-D Röntgen-Durchstrahlungsprojektionen 42 erzeugt werden. Es wird also eine sogenannte 2-D Extraktion 40 durchgeführt. In der Computertomografie werden die Absorptionsunterschiede der Probentiefe (y) auf die xy-Ebene projiziert. Die so extrahierten 2-D Röntgen-Durchstrahlungsprojektionen 42 enthalten 2-D Pulverkornprojektionen 45. Anschließend und/oder gleichzeitig werden die 2-D Röntgen-Durchstrahlungsprojektionen 42 zu einem digitalen Volumen 100 a entlang einer 3-D Bildsyntheserichtung 52, die der Rotationrichtung 51 im realen Raum entspricht, zu einem 3-D Bild (digitales Volumen) zusammengesetzt. Dieses digitale Volumen 100 a enthält 3-D Pulverkornrepräsentationen 46 (3-D Bilder der Pulverkörner). Diese 3-D Pulverkornrepräsentationen 46 sind somit 3-D Bilder von sphärischen 80 a und asphärischen Pulverkörnern 80 b sowie 3-D Bilder von Pulverkörnern mit Hohlraum 80 c. Anschließend wird ein digitales Teilvolumen 100 b aus dem digitalen Teilvolumen 100 a ausgewählt 60 und isoliert.

**Fig. 4a** zeigt ein digitales Volumen 100 a nach einem Verfahren im Stand der Technik. **Fig. 4b** zeigt zum Vergleich ein digitales Volumen 100 a nach einem erfindungsgemäßen Verfahren. Zur Veranschaulichung sind 2-D Röntgen-Durchstrahlungsprojektionen, senkrecht 42 a zur Rotationsachse 19, sowie 2-D Röntgen-Durchstrahlungsprojektionen, parallel 42 b, 42 c zur Rotationsachse 19, sowie eins aus der 3-D Synthese hervorgehendes digitales Volumen 100 a gezeigt.

**Figur 5** zeigt ein digitales Teilvolumen 100 b, anhand derselben Probe in **Figur 5a, Figur 5b** und **Figur 5c****.** Von Fig. 5a ausgehend über Fig. 5b bis Fig. 5c wird das digitale Teilvolumen 100 b verkleinert, wodurch die Partikel anschaulicher dargestellt werden und weitere Details sichtbar werden, wie 3-D Bildrepräsentationen vereinzelt vorliegender sphärischer Pulverkörner 46 a, sowie asphärischer Pulverkörner 46 b. Durch das Vorliegen der Informationen in einem digitalen Teilvolumen 100 b können Aussagen darüber getroffen werden, ob Pulverkörner die agglomeriert aussehen 46 c, tatsächlich vereinzelt sind oder nur durch die Anordnung auf einer beinahe identischen Blickachse nur in der 2-D Bilddarstellung des dreidimensionalen digitalen Teilvolumens 100 b in der Bilddarstellung teilweise überlappen. Daher sind die Partikel 46 c auch als vereinzelte Partikel im Verfahren zu identifizieren.

Diese 3-D Bilddarstellungen der Pulverkörner 80 können anschließend isoliert betrachtet werden 700, wie in **Fig. 6** gezeigt. Fig. 6 zeigt 2-D Pulverkornprojektionen, senkrecht 45 a zur Rotationsachse 19 des festen Körpers 10, sowie 2-D Pulverkornschnittbilder, parallel 45 b, 45 c zur Rotationsachse 19 des festen Körpers 10. **Fig. 6** zeigt vergleichend ein 3-D Bild eines sphärischen Pulverkorns 80 a, ein 3-D Bild eines asphärischen Pulverkorns 80 b und ein 3-D Bild eines Pulverkorns mit einen Hohlraum 80 c. Aus diesen 3-D Bildern der Pulverkörner 80 können die Kenngrößen 20, etwa Sphärizität Oberflächenbeschaffenheit, Pulverkornlänge, Pulverkorndurchmesser, usw. extrahiert werden.

**Fig. 7** zeigt eine rasterelektronenmikroskopische Aufnahme (REM) eines Pulverkorns 43 einer statistisch validierbaren Pulverrepräsentation nach einer 2-D Dünnschichtpräparation. Das Pulverkorn 43 weist strukturierte/raue Oberflächenbereiche 47 und glatte Oberflächenbereiche, sowie Satellitenanhaftung 49 auf. Daraus werden initiäre Pulverkornstrukturparameter 14, darunter eine initiäre Sphärizität, ein initiären Pulverkornvolumen, eine initiäre Pulverkornlänge, eine initiäre Oberflächenbeschaffenheit, eine intiäre Satellitenanhaftungswahrscheinlichkeit usw. ermittelt.

**Fig. 8** zeigt ein digitales Teilvolumen 100 b, wobei die Bemaßung den Gesamtdurchmesser des zylinderförmigen digitalen Volumens 100 a darstellt und die Blickrichtung der Rotationsachse 19 des festen Körpers 10 entspricht.

Vorzugsweise beträgt die höchste CT-Auflösung 0,5 µm. Diese kann stufenlos nach oben gesteigert werden.

### Zitierte Nichtpatentliteratur

- Mostafaei *et al.* 2018: "Comparison of characterization methods for differently atomized nickel-based alloy 625 powders", Amir Moustafaei, Colleen Hilla, Erica L. Stevens, Peeyush Nandwana, Amy M. Elliot, Markus Chmielus, Powder Technology, 333, 180-192, 2018

J. A. Slotwinski et al.: "Characterization of Metal Powders Used for Additive Manufacturing", J Res Natl Inst Stand Technol, vol. 119, p.460, XP055424247, DOI: 10.6028/jres.119.018,

### Bezugszeichenliste

- 1: Verfahren zur Aufbereitung und zur Untersuchung eines Pulvers mittels instrumenteller Analytik
- 2: Gesamtheit des Pulvers
- 3: Pulverprobe, Kleinmenge des Pulvers für Untersuchung des Pulvers mittels Makroskopie und chemischer Analyse
- 4: initiäre Kleinmenge
- 5: statistisch validierbare Pulverrepräsentation
- 6: zweidimensionale REM-Darstellung
- 10: fester Körper
- 11: Verfahrenskontrollpunkt
- 12: makroskopische Pulverparameter: Hausner-Faktor, Korrosionsgrad, Oxidationsgrad
- 13: chemische Komponenten: Nichtmetallgehalt (N, C, O, H), Oxidanteil
- 14: initiäre Pulverkornstrukturparameter: Sphärizität, Pulverkornvolumen, Pulverkornlänge
- 15: Partikelgröße, Partikelgrößenverteilung, Sphärizität, Formfaktorenverteilung, HDP, Partikeloberflächenbeschaffenheit
- 16: Aufreinigung
- 17: flüssige Vorstufe des festen Körpers
- 18: Pulverkornabstand
- 19: Rotationsachse
- 20: Kenngrößen
- 30: 3D-Bildgebung des festen Körpers
- 40: 2D-Extraktion
- 41 a: 2-D Projektionsebenen, senkrecht zur Rotationsachse
- 41 b, 41 c,...: 2-D Projektionsebenen, entlang/parallel zur Rotationsachse
- 42 a: 2-D Röntgen-Durchstrahlungsprojektion, senkrecht zur Rotationsachse
- 42 b, 42 c: 2-D Röntgen-Durchstrahlungsprojektion, entlang/parallel der Rotationsachse
- 43: Pulverkorn in statistisch validierbarer Pulverrepräsentation
- 44: Pulverkorn
- 44 a: vereinzelt vorliegendes Pulverkorn
- 44 b: Agglomeration aus Pulverkörnern
- 45: 2-D Pulverkornprojektion
- 45 a: 2-D Pulverkornprojektion, senkrecht zur Rotationsachse
- 45 a, 45 b,...: 2-D Pulverkornprojektion, entlang/parallel der Rotationsachse
- 46: 3D Pulverkornrepräsentation = 3-D Bild eines Pulverkorns
- 46 a: 3-D Bild eines sphärischen vereinzelten Partikels in einem Teilvolumen
- 46 b: 3-D Bild eines asphärischen vereinzelten Partikels in einem Teilvolumen
- 46c: 3-D Bild zweier vereinzelter Partikel, jedoch auf ähnlicher Blickachse, sich daher teilweise überdeckend
- 47: raue Oberfläche
- 48: glatte Oberfläche
- 49: Satellit
- 50: 3-D Bildsynthese aus 2-D Schnittbildern
- 51: Rotationsrichtung des festen Körpers
- 52: 2-D Projektionszusammensetzung zur 3-D Bildsynthese
- 60: Auswahl eines digitalen Teilvolumens aus einem digitalen Volumen
- 70: Ultraschall
- 80 a: 3-D Bild eines sphärischen Pulverkorns
- 80 b: 3-D Bild eines asphärischen Pulverkorns
- 80 c: 3-D Bild eines Pulverkorns mit Hohlraum
- 100 a: digitales Volumen des festen Körpers
- 100 b: digitales Teilvolumen eines digitalen Volumens des festen Körpers
- 200: Herstellung eines festen Körpers
- 200 a: Zusammenmischung einer flüssigen Vorstufe des festen Körpers
- 200 b: Beaufschlagung der Vorstufe des festen Körpers mit Ultraschall
- 200 c: Aushärten der Vorläuferstufe zu einem festen Körper
- 200 d: Aushärtung des festen Körpers abgeschlossen
- 300: erste Komponente eines Zweikomponentenharzes
- 400: zweite Komponente eines Zweikomponentenharzes
- 500: Dispergiermittel
- 600: Hauptschüttelrichtung eines Schüttelmittels
- 700: Einzelbetrachtung von 3-D Bildrepräsentationen von Pulverkörnern zur Ermittlung von weiteren Kenngrößen

- Makroskopie: Schüttverhaltensanalyse
- Chem. Ana.: Chemische Analyse
- REM: Rasterelektronenmikroskopie
- CT: Computertomografie

## Patentansprüche

1. Verfahren (1) zur Aufbereitung und zur Untersuchung eines Pulvers (2) mittels instrumenteller Analytik, unter Herstellung eines festen Körpers (10), der aus einem Zweikomponentenharz gebildet ist, wobei der feste Körper (10) eine Vielzahl von vereinzelt (44a) und homogen im Körper (10) vorliegenden Pulverkörner (44), die von umgebenden Pulverkörnern (44) beabstandet sind, aufweist, wobei die Pulverkörner (44), die im festen Körper (10) angeordnet sind, eine statistisch validierbare Pulverrepräsentation (5) von Pulverkörnern (43) eines Pulvers (2) sind, umfassend die Schritte:
- Einbringen der Pulverkörner (43) der statistisch validierbaren Pulverrepräsentation (5) in eine flüssige Vorläuferstufe (17) des festen Körpers (10);
- Vereinzeln und Beabstanden (200 a, 200 b) der Pulverkörner (43, 44) der statistisch validierbaren Pulverrepräsentation (5) zu den sie umgebenden Pulverkörnern (43, 44) der statistisch validierbaren Pulverrepräsentation (5) und homogen Verteilen in der Vorläuferstufe (17), indem Ultraschall (70) und Rührmittel auf die in die Vorläuferstufe eingebrachten Pulverkörner (44) wirken;
- Fixieren der Position (200c, 200d) der vereinzelten Pulverkörner (44a) der statistisch validierbaren Pulverrepräsentation (5), indem die Vorläuferstufe (17) des festen Körpers (10), aufweisend die vereinzelten (44a) und zu anderen Pulverkörnern der statistisch validierbaren Pulverrepräsentation (5) beabstandeten und in der Vorläuferstufe (17) homogen verteilten Pulverkörner (44) der statistisch validierbaren Pulverrepräsentation (5), in einen festen Körper (10) übergeht oder die Vorläuferstufe (17) in einen festen Körper (10) überführt wird, indem der Vorläuferstufe (17) eine zweite Komponente des Zweikomponentenharzes zugegeben wird, wobei die Verteilung der Vielzahl von Pulverkörnern (44) im festen Körper (10) derart homogen ist, dass der feste Körper (10), insbesondere über den gesamten festen Körper (10), eine gleiche Pulverkorndichte aufweist;
- Bildliches, insbesondere computertomografisches Darstellen (CT, 30) des festen Körpers (10);
- Ermitteln und Ausgeben von mindestens einer Kenngröße (20) der statistisch validierbaren Pulverrepräsentation (5) von Pulverkörnern (43) des Pulvers (2), durch Auswerten der mindestens einen bildlichen, insbesondere computertomografischen Darstellung (CT, 30) des festen Körpers (10).

2. Verfahren nach Anspruch 1,
**dadurch gekennzeichnet, dass**
es die Schritte umfasst:
- Erzeugen mindestens einer zweidimensionalen bildlichen Darstellung (6) einer initiären Kleinmenge (4) von Pulverkörnern (43) des Pulvers (2) und
- Ermitteln und Ausgeben von mindestens einem initiären Pulverkornstrukturparameter (14) basierend auf der mindestens einen zweidimensionalen bildlichen Darstellung (6) der initiären Kleinmenge (4),
wobei beim bildlichen, insbesondere computertomografischen Darstellen (30) des festen Körpers (10) mindestens ein Bildgebungsparameter und/oder mindestens eine Bildaufnahmeeinstellung, insbesondere eine Probenposition, basierend auf dem mindestens einen initiären Pulverkornstrukturparameter (23) angepasst wird.

3. Verfahren nach Anspruch 1 oder 2,
**dadurch gekennzeichnet, dass**
mindestens ein makroskopischer Pulverparameter (12), insbesondere ein Schüttverhalten und/oder mindestens eine Färbung des Pulvers, und/oder mindestens eine chemische Komponente (13) des Pulvers ermittelt wird.

4. Verfahren nach einem der vorhergehenden Ansprüche,
**dadurch gekennzeichnet, dass**
die zweidimensionale bildliche Darstellung (6) mindestens eine Vergrößerungsbilddarstellung (6) der Pulverkörner (43) der initiären Kleinmenge (4) aufweist.

5. Verfahren nach Anspruch 4,
**dadurch gekennzeichnet, dass**
basierend auf der mindestens einen Vergrößerungsbilddarstellung (6), Formparameter und/oder Zustandsparameter der Pulverkörner als initiäre/n Pulverkornstrukturparameter (14) erhalten werden.

6. Verfahren nach einem der vorhergehenden Ansprüche,
**dadurch gekennzeichnet, dass**
im Verfahren Verunreinigungen aus dem Pulver extrahiert werden und das Extrakt und/oder das aufgereinigte Pulver untersucht werden, insbesondere durch Wiegen untersucht werden, weiter insbesondere durch Rasterelektronenmikroskopie untersucht werden.

7. Verfahren nach Anspruch 6,
**dadurch gekennzeichnet, dass**
das Extrakt der Verunreinigungen entsprechend denen für das Pulver (2) angewandten Untersuchungen oder Teilen der Untersuchungen oder einem Teil der Untersuchungen oder mindestens einem Teil mindestens einer der Untersuchungen, insbesondere mittels zweidimensionaler bildlicher Darstellung (6) untersucht wird, wodurch Aufreinigungsparameter bestimmbar sind.

8. Verfahren nach einem der vorhergehenden Ansprüche,
**dadurch gekennzeichnet, dass**
mindestens ein Schritt des Verfahrens wiederholt wird.

9. Verfahren nach einem der vorhergehenden Ansprüche,
**dadurch gekennzeichnet, dass**
eine statistisch validierbare Pulverrepräsentation (5) mindestens 100 Pulverkörner (43), insbesondere mindestens 1.000 und/oder höchstens 10.000.000 Pulverkörner (43), insbesondere höchstens 1.000.000 Pulverkörner (43) umfasst.

10. Verfahren nach einem der vorhergehenden Ansprüche,
**dadurch gekennzeichnet, dass**
bei der Herstellung des festen Körpers mindestens eine Vorläuferstufe (17) des festen Körpers (10) mit Ultraschall (70) beaufschlagt wird.

11. Verfahren nach Anspruch 10,
**dadurch gekennzeichnet, dass**
bei der Herstellung des festen Körpers die Vorläuferstufe (17) zu einer Zeit mit Ultraschall (70) beaufschlagt wird, in der sich die Vorläuferstufe (17) zu einem festen Körper (10) ausbildet.

12. Verfahren nach einem der vorhergehenden Ansprüche,
**dadurch gekennzeichnet, dass**
die 3D-Bildgebung (30) die Erstellung eines digitalen Volumens (100 a) des Körpers (10) aufweist.

13. Verfahren nach einem der Ansprüche 2 bis 12,
**dadurch gekennzeichnet, dass**
mindestens ein Pulverkornstrukturparameter (14) mindestens eine Partikelgröße ist und mindestens ein 3D-Bildgebungsparameter eine Detektionsauflösung ist.

14. Verfahren nach einem der Ansprüche 2 bis 13,
**dadurch gekennzeichnet, dass**
mindestens ein Pulverkornstrukturparameter (14) ein Absorptionsverhalten ist und mindestens ein 3D-Bildgebungsparameter eine Quelleneinstellung ist.

15. Verfahren nach einem der vorhergehenden Ansprüche,
**dadurch gekennzeichnet, dass**
mindestens eine Kenngröße (20) ein Volumen und/oder eine Fläche und/oder eine Länge ist.

## Claims

1. A method (1) for preparing and analyzing a powder (2) by means of instrumental analysis, wherein a solid body (10) is produced that is formed from a two-component resin, wherein the solid body (10) includes a plurality of powder granules (44) which are separately (44a) and homogeneously present in the body (10) and which are spaced apart from surrounding powder granules (44), wherein the powder granules (44) that are arranged in the solid body (10) are a statistically validatable powder representation (5) of powder granules (43) of a powder (2), the method including the steps:
- introducing the powder granules (43) of the statistically validatable powder representation (5) into a liquid precursor stage (17) of the solid body (10);
- separating and spacing (200a, 200b) the powder granules (43, 44) of the statistically validatable powder representation (5) in relation to the surrounding powder granules (43, 44) of the statistically validatable powder representation (5) and distributing them homogeneously in the precursor stage (17) through the action of ultrasound (70) and mixing means on the powder granules (44) introduced into the precursor stage;
- fixing the position (200c, 200d) of the separated powder granules (44a) of the statistically validatable powder representation (5) through the transition of the precursor stage (17) of the solid body (10) into a solid body (10) or the conversion of the precursor stage (17) into a solid body (10), the precursor stage (17) of the solid body (10) including the powder granules (44) of the statistically validatable powder representation (5) which have been separated (44a) and spaced apart in relation to other powder granules of the statistically validatable powder representation (5) and which are distributed homogeneously in the precursor stage (17), by adding a second component of the two-component resin to the precursor stage (17), wherein the distribution of the plurality of powder granules (44) in the solid body (10) is so homogeneous that the solid body (10) has a uniform powder granule density, in particular over the entire solid body (10);
- representing (CT, 30) the solid body (10) graphically, in particular via computed tomography;
- determining and outputting at least one characteristic value (20) of the statistically validatable powder representation (5) of powder granules (43) of the powder (2), by evaluating the at least one graphical, in particular computed-tomographic, representation (CT, 30) of the solid body (10).

2. The method according to claim 1,
**characterized in that**
it includes the steps:
- generating at least one two-dimensional graphical representation (6) of an initial small amount (4) of powder granules (43) of the powder (2) and
- determining and outputting at least one initial powder-granule structure parameter (14) based on the at least one two-dimensional graphical representation (6) of the initial small amount (4),
wherein, when representing (30) the solid body (10) graphically, in particular via computed tomography, at least one imaging parameter and/or at least one image-capture setting, in particular a sample position, is adjusted based on the at least one initial powder-granule structure parameter (23).

3. The method according to claims 1 or 2,
**characterized in that**
at least one macroscopic powder parameter (12) is determined, in particular a flow behaviour and/or at least one hue of the powder, and/or at least one chemical component (13) of the powder.

4. The method according to any one of the preceding claims,
**characterized in that**
the two-dimensional graphical representation (6) includes at least one magnified graphical representation (6) of the powder granules (43) of the initial small amount (4).

5. The method according to claim 4,
**characterized in that**,
initial powder-granule structure parameters (14) in the form of shape parameters and/or state parameters of the powder granules are obtained based on the at least one magnified graphical representation (6).

6. The method according to any one of the preceding claims,
**characterized in that**
impurities are extracted from the powder in the method and the extract and/or the purified powder are analysed, in particular analysed by weighing, especially analysed using scanning electron microscopy.

7. The method according to claim 6,
**characterized in that**
the extract of the impurities is analysed analogously to the analyses performed for the powder (2), or to parts of these analyses, or to a part of these analyses, or to at least a part of at least one of these analyses, in particular by means of a two-dimensional graphical representation (6) via which purification parameters can be determined.

8. The method according to any one of the preceding claims,
**characterized in that**
at least one step of the method is repeated.

9. The method according to any one of the preceding claims,
**characterized in that**
a statistically validatable powder representation (5) includes a minimum of 100 powder granules (43), in particular a minimum of 1,000 and/or a maximum of 10,000,000 powder granules (43), in particular a maximum of 1,000,000 powder granules (43).

10. The method according to any one of the preceding claims,
**characterized in that**
at least one precursor stage (17) of the solid body (10) is subjected to ultrasound (70) during production of the solid body.

11. The method according to claim 10,
**characterized in that**,
during the production of the solid body, the precursor stage (17) is subjected to ultrasound (70) at a stage during the transition of the precursor stage (17) into a solid body (10).

12. The method according to any one of the preceding claims,
**characterized in that**
the 3D-imaging (30) includes the creation of a digital volume (100a) of the body (10).

13. The method according to any of claims 2 to 12,
**characterized in that**
at least one powder-granule structure parameter (14) is at least one particle size, and at least one 3D-imaging parameter is a detection resolution.

14. The method according to any of claims 2 to 13,
**characterized in that**
at least one powder-granule structure parameter (14) is an absorption behaviour, and at least one 3D-imaging parameter is a source setting.

15. The method according to any one of the preceding claims,
**characterized in that**
at least one characteristic value (20) is a volume and/or a surface area and/or a length.

## Revendications

1. Procédé (1), destiné à traiter et à analyser une poudre (2) au moyen d'une analyse instrumentale, en produisant un corps solide (10), qui est constitué d'une résine bicomposants, le corps solide (10) comportant une pluralité de grains (44) de poudre, se présentant de manière désolidarisée (44a) et homogène dans le corps solide (10) qui sont écartés de grains (44) de poudre environnants, les grains (44) de poudre qui sont placés dans le corps solide (10) étant une représentation de poudre (5) statistiquement validable de grains (43) de poudre d'une poudre (2), comprenant les étapes consistant à:
- introduire les grains (43) de poudre de la représentation de poudre (5) statistiquement validable dans un stade précurseur (17) liquide du corps solide (10) ;
- désolidariser et écarter (200a, 200b) les grains (43, 44) de poudre de la représentation de poudre (5) statistiquement validable des grains (43, 44) de poudre qui les entourent de la représentation de poudre (5) statistiquement validable et les distribuer de manière homogène dans le stade précurseur (17), en ce que des ultrasons (70) et des moyens agitateurs agissent sur les grains (44) de poudre introduits dans le stade précurseur ;
- fixer la position (200c, 200d) des grains (44a) de poudre désolidarisés de la représentation de poudre (5) statistiquement validable, en ce que le stade précurseur (17) du corps solide (10), comportant les grains (44) de poudre désolidarisés (44a) et écartés d'autres grains de poudre de la représentation de poudre (5) statistiquement validable et distribués de manière homogène dans le stade précurseur (17) transite en un corps solide (10) ou l'on fait passer le stade précurseur (17) en un corps solide (10), en ajoutant au stade précurseur (17) un deuxième composant de la résine bicomposants, la distribution de la pluralité de grains (44) de poudre dans le corps solide (10) étant homogène à un point, que le corps solide (10) présente notamment sur l'ensemble du corps solide (10) une même densité des grains de poudres ;
- représenter (CT, 30) par imagerie, notamment par tomodensitométrie le corps solide (10) ;
- déterminer et éditer au moins une grandeur caractéristique (20) de la représentation de poudre (5) statistiquement validable de grains (43) de poudre de la poudre (2), par interprétation de l'au moins une représentation (CT, 30) par imagerie, notamment par tomodensitométrie du corps solide (10).

2. Procédé selon la revendication 1,
**caractérisé**
**en ce qu'**il comprend les étapes consistant à :
- créer au moins une représentation (6) bidimensionnelle par imagerie d'une petite quantité (4) initiale de grains (43) de poudre de la poudre (2) et
- déterminer et éditer au moins un paramètre (14) initial de structure de grains de poudre sur la base de l'au moins une représentation (6) bidimensionnelle par imagerie de la petite quantité (4) initiale,
lors de la représentation (30) par imagerie, notamment par tomodensitométrie du corps solide (10), au moins un paramètre d'imagerie et/ou au moins un réglage de capture d'image, notamment une position d'échantillon étant adapté(e) sur la base de l'au moins un paramètre (23) initial de structure de grains de poudre.

3. Procédé selon la revendication 1 ou 2,
**caractérisé**
**en ce que** l'on détermine au moins un paramètre (12) macroscopie de poudre, notamment une fluidité et/ou au moins une coloration de la poudre, et/ou au moins un composant (13) chimique de la poudre.

4. Procédé selon l'une quelconque des revendications précédentes,
**caractérisé**
**en ce que** la représentation (6) par imagerie bidimensionnelle comporte une représentation (6) par imagerie agrandie des grains (43) de poudre de la petite quantité (4) initiale.

5. Procédé selon la revendication 4,
**caractérisé**
**en ce que** sur la base de l'au moins une représentation (6) par imagerie agrandie, l'on obtient des paramètres de forme et/ou des paramètres d'état des grains de poudre, en tant que paramètre(s) (14) initial/initiaux de structure de grains de poudre.

6. Procédé selon l'une quelconque des revendications précédentes,
**caractérisé**
**en ce que** dans le procédé, l'on extrait des impuretés de la poudre et l'on analyse l'extrait et/ou la poudre épurée, notamment par analyse par pesage, notamment par ailleurs par microscopie électronique à balayage.

7. Procédé selon la revendication 6,
**caractérisé**
**en ce que** l'on analyse l'extrait des impuretés en fonction des analyses ou de parties des analyses ou d'une partie des analyses ou au moins d'une partie d'au moins l'une des analyses mises en œuvre pour la poudre (2), notamment au moyen d'une représentation (6) bidimensionnelle par imagerie, suite à quoi des paramètres d'épuration sont définissables.

8. Procédé selon l'une quelconque des revendications précédentes,
**caractérisé**
**en ce que** l'on répète au moins une étape du procédé.

9. Procédé selon l'une quelconque des revendications précédentes,
**caractérisé**
**en ce qu'**une représentation de poudre (5) statistiquement validable comprend au moins 100 grains (43) de poudre, notamment au moins 1.000 et/ou au plus 10.000.000 grains (43) de poudre, notamment au plus 1.000.000 de grains (43) de poudre.

10. Procédé selon l'une quelconque des revendications précédentes,
**caractérisé**
**en ce que** lors de la production du corps solide, l'on expose aux ultrasons (70) au moins un stade précurseur (17) du corps solide (10).

11. Procédé selon la revendication 10,
**caractérisé**
**en ce que** lors de la production du corps solide, l'on expose le stade précurseur (17) aux ultrasons (70) à un moment auquel le stade précurseur (17) se constitue en un corps solide (10).

12. Procédé selon l'une quelconque des revendications précédentes,
**caractérisé**
**en ce que** l'imagerie (30) en 3D comporte l'élaboration d'un volume (100a) numérique du corps solide (10).

13. Procédé selon l'une quelconque des revendications 2 à 12,
**caractérisé**
**en ce qu'**au moins un paramètre (14) de structure de grains de poudre est au moins une taille de particules et au moins un paramètre d'imagerie en 3D est une résolution de détection.

14. Procédé selon l'une quelconque des revendications 2 à 13,
**caractérisé**
**en ce qu'**au moins un paramètre (14) de structure de grains de poudre est un comportement d'absorption et au moins un paramètre d'imagerie en 3D est un réglage source.

15. Procédé selon l'une quelconque des revendications précédentes,
**caractérisé**
**en ce qu'**au moins une grandeur caractéristique (20) est un volume et/ou une surface et/ou une longueur.
